# EUROPEAN PATENT APPLICATION

(11) **EP 3 315 474 A1**
(43) Date of publication of application: **02.05.2018**
(21) Application number: 16196161.0
(22) Date of filing: 28.10.2016
(51) Int. Cl.: C04B 28/02, C04B 28/04, C04B 20/10

(54) **HYDROPHOBIZED FIBER CEMENT PRODUCTS, METHODS FOR PRODUCTION AND USES THEREOF**

(71) Applicant: ETEX SERVICES NV, 1880 Kapelle-op-den-Bos (BE)
(72) Inventor: SPAETH, Valérie, 1880 Kapelle-op-den-Bos (BE)
(74) Representative: Vaeck, Elke

(57) **Abstract**

The present invention relates hydrophobized fiber cement products and methods for the production thereof as well as uses of such products, in particular in the building industry.

In particular, the present invention provides hydrophobized fiber cement product, comprising a fiber cementitious matrix and a hydrophobizing agent uniformly dispersed therein, wherein said hydrophobizing agent comprises at least one hydrophobic silicone resin.

The present invention further provides porcesses for producing a hydrophobized fiber cement product with enhanced water impermeability, wherein said process comprises at least the steps of:
a) admixing an inorganic curable cementitious matrix with a hydrophobizing agent to form a curable mixture, wherein said hydrophobizing agent comprises at least one hydrophobic silicone resin,
b) transforming the curable mixture into a shaped body; and
c) curing the curable mixture to form a uniformly hydrophobized fiber cement product.

## Description

The present invention relates to fiber cement products, exhibiting a hydrophobic character. The invention also relates to methods for the production of these hydrophobized fiber cement products as well as uses of these products, in particular in the building industry.

It is typically desirable for fiber cementitious materials to be, at least to a certain extent, hydrophobic. For example, moisture penetration into cementitious substrates can cause these materials to expand, to crack, and to cause ultimate deterioration of the structure of the building materials. Water moisture also greatly induces microbial invasion and attack, often resulting in unsightly discoloration.

It is known in the art to apply hydrophobizing agents to a surface of the building material to confer hydrophobicity, wherein the hydrophobizing agents are often delivered as a solution, emulsion, or dispersion, and applied to the surface as a coating or a sealer. The solvent or liquid phase may be water or an organic liquid or mixture thereof. From an environmental standpoint, water is preferred as the solvent or continuous phase to avoid VOC emissions.
However, these compositions or processes for rendering a surface hydrophobic have met with limited use. The main reason is the fact that a primer is often needed as a base coating before the hydrophobizing surface coating or sealer may be applied. Moreover, even before the primer or the base coating is deposited onto the surface, the surface has to be subjected to laborious pretreatment with water or acid vapor, or by sandblasting. Furthermore, the degree of hydrophobicity typically decreases over time. The pre-treatment steps along with the base coating applications thus inevitably cause the use of these hydrophobizing surface coatings to be more time consuming, more labor intensive, and much less cost effective.

The above-described disadvantages of surface hydrophobization have more recently been overcome by methods using so-called in-mass hydrophobization technologies of cementitious materials. These methods basically imply the addition of a hydrophobic agent in the cementitious matrix before it is hardened, such that the hydrophobizing agent is dispersed "in the mass", i.e. throughout the entire internal structure, of the product.
In this respect, hydrophobizing agents have been developed for use in cementitious materials, as for instance described in EP0811584. The agent comprises an active organopolysiloxane component, a water-soluble or water dispersible binder and water-soluble, water-insoluble or water dispersible carriers. However, the effectiveness of the hydrophobic properties of the agent was observed to decrease significantly with each wetting of the applied cementitious material, particularly when the binder and carrier were water-soluble materials, and as such provided only limited hydrophobic protection when compared with traditional hydrophobers used in the industry, such as metal soaps.

The above-described and other known in-mass hydrophobization technologies can however not be used for hydrophobizing fiber cement products. This is because fiber cement products are typically produced through water-based fiber cement formation processes, such as for example the so-called Hatschek process, Magnani process, and flow-on technology. These processes inherently comprise a (semi-)closed loop water system, wherein a large amount of water is permanently being transported and circulated throughout the production line. In this way, typically one or more layers of water-based fiber cement slurry are first deposited onto the production felt and subsequently dewatered, upon which at least a part of the process water is recycled to the fiber cement slurry supply.

Accordingly, when using the known in-mass hydrophobization technologies or agents of the prior art in fiber cement production processes, most of the active hydrophobizing agent is lost with the process water and the remaining active agent still present within the fiber cement product, if any, is not uniformly dispersed within the internal structure of the end product.

### SUMMARY OF THE INVENTION

It is an object of the present invention to develop agents and methods, which are suitable for the effective and efficient in-mass hydrophobization of fiber cement products. Moreover, it is an object of the present invention to develop novel and improved in-mass hydrophobized fiber cement products wherein all known undesirable effects caused by water absorption, such as expansion, cracking, deterioration of the structure, microbial invasion, discoloration and efflorescence, are avoided.

The inventors have tried to solve the above-described issues for hydrophobizing fiber cement products in the mass.
This was technically difficult because such products are typically produced through water-based fiber cement formation processes. In fact, when using conventional hydrophobizing agents in a water-based production process, most of the active hydrophobizing agent migrates from the product into the process water and is lost. Moreover, any remaining active agent, which may still be present within the fiber cement product, is not uniformly dispersed within the internal structure of the end product, and therefore does not provide a sufficient degree of water impermeability. Therefore, it is impossible with the currently available hydrophobizing agents to produce a fiber cement product which is sufficiently and uniformly hydrophobic throughout its entire structure.

The inventors have managed to solve this problem by searching for and identifying a hydrophobizing agent, which proved particularly suitable for performing effective in-mass hydrophobization of a fiber cement product, namely an agent comprising at least one silicone resin.

The present invention is thus directed to hydrophobized fiber cement products prepared from a raw material mix containing at least one hydrophobic silicone resin.
In particular, the present inventors have surprisingly found that, for in-mass hydrophobization of fiber cement products produced (which are per definition produced in a water-based process), the use of a hydrophobic silicone resin is highly advantageous in the context of a water-based production process at an alkaline pH.

Accordingly, in a first aspect, the present invention provides hydrophobized fiber cement products, comprising a fiber cementitious matrix and a hydrophobizing agent, wherein the hydrophobizing agent comprises at least one silicone resin (as more fully described hereinafter).

More specifically, it was found that the at least one silicone resin used in the products of the present invention is highly stable and spreads uniformly in the cementitious matrix, in contrast with the known conventional silanes and siloxanes. Moreover, it has been observed that the at least one silicone resin used in the products of the present invention is less sensitive and more stable in relation to alkaline medium, optionally in combination with high temperatures, when comparing to the known silanes and siloxanes. It has also been surprisingly discovered that very complete hydrophobization of fiber cement products can be accomplished with the use of only minor amounts (i.e. low doses) of the hydrophobic silicone resin.

The hydrophobic silicone resin is uniformly dispersed throughout the matrix of the fiber cement products, preferably such that there is no more than a 20 percent difference and preferably no more than a 10 percent in amount between any two equivalent volume regions within the product. The uniformity can be tested by visual inspection, such that regions of substantially different appearance are not detected, and also by applying drops of water to various positions on a cut surface, and measuring the degree of water absorption. In general, the minimum size of areas tested will be approximately 1 cm x 1 cm when areal uniformity is measured, and 1 cm x 1 cm x 1 cm when volume uniformity is measured.

In particular embodiments, the hydrophobized fiber cement products of the present invention comprise at least one hydrophobic silicone resin, which is chosen from the group consisting of a DT resin, an MQ resin, an MT resin, an MQT resin, and any combination thereof. In yet further particular embodiments, fiber cement products of the present invention comprise at least one hydrophobic silicone resin, which is a DT resin.

In certain particular embodiments, the hydrophobized fiber cement products of the present invention comprise at least one hydrophobic silicone resin, which is liquid at ambient temperature.

In particular embodiments, the hydrophobized fiber cement products of the present invention comprise at least one hydrophobic silicone resin, which contains at least one alkoxy group, or combinations thereof.

In particular embodiments, the hydrophobized fiber cement products of the present invention comprise at least one hydrophobic silicone resin, which is present in an amount of between 0.01 to 2 percent by weight of the total weight of the product (i.e. % of active ingredient based on the total mass of solids), more preferably between 0.05 and 0.5 percent by weight of the total weight of the product (i.e. % of active ingredient based on the total mass of solids).

In particular embodiments, the hydrophobized fiber cement products of the present invention comprise at least one carrier onto which the at least one hydrophobic silicone resin is adsorbed.
Indeed, the presence of a carrier in the hydrophobizing agents as used in the products of the present invention additionally and advantageously ensures that the silicone resin is almost completely retained within the mass of the fiber cement product during the production process and thus avoids part of the silicone resin being flushed away with the process water. Moreover, the carrier ensures a highly uniform distribution of the hydrophobizing agent throughout the internal structure of the fiber cement product. In further particular embodiments, the at least one carrier is selected from starch, native starch, methyl cellulose, carboxy methyl cellulose, cement, sand, silica, fly ash, alumino silicates, clay materials (for example but not limited to kaolin), lime, limestone, calcium carbonates, polystyrene beads and polyacrylate beads.

In a second aspect, the present invention provides processes for producing hydrophobized fiber cement products with enhanced water impermeability, wherein the processes comprise at least the steps of:
a) admixing an inorganic curable cementitious matrix with a hydrophobizing agent to form a curable mixture, wherein the hydrophobizing agent comprises at least one hydrophobic silicone resin,
b) transforming the curable mixture into a shaped body; and
c) curing the curable mixture to form a uniformly hydrophobized fiber cement product.

In particular embodiments of the processes according to the invention, the at least one hydrophobic silicone resin used in step a), is chosen from the group consisting of at least one hydrophobic silicone resin is selected from the group consisting of a DT resin, an MQ resin, an MT resin, an MQT resin, and combinations thereof. In yet further particular embodiments of the processes according to the invention, the at least one hydrophobic silicone resin used in step a) is a DT resin.

In particular embodiments of the processes according to the invention, step c) of curing is conducted in an autoclave such that the shaped body is autoclaved under heat at elevated pressure to form a uniformly hydrophobized fiber cement product.

In particular embodiments of the processes according to the invention, the inorganic curable cementitious matrix is cooled prior to performing step (a), such that the hydrophobic silicone resin remains stable when admixed to the inorganic curable cementitious matrix.

In a third aspect, the present invention provides hydrophobized fiber cement products obtainable by the processes according to the invention.

In a fourth aspect, the present invention provides uses of the fiber cement products and sheets obtainable by the processes according to the present invention, and more particularly uses in the building industry.

In particular embodiments, the fiber cement sheets produced and/or obtainable by the processes of the present invention can be used to provide an outer surface to walls, both internal as well as external, a building or construction, e.g. as façade plate, siding, corrugated sheet etc.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

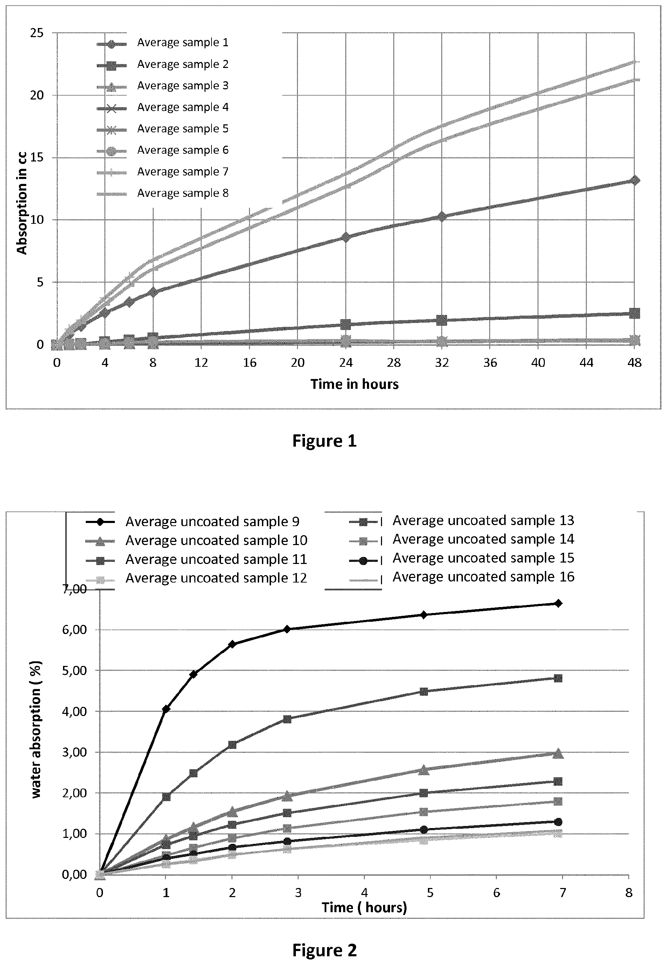

**Figure 1****:** shows a graph representing the amount of water absorption (cc) in function of time for 7 different air-cured fiber cement test samples (samples 2 to 8), which were hydrophobized according to the methods of the invention, and a non-hydrophobized air-cured fiber cement reference sample (sample 1). The water absorption was measured using a Karsten test as further described herein.
**Figure 2****:** shows a graph representing the water absorption (expressed as the percentage (%) of weight increase of a sample) in function of time for 8 different uncoated air-cured hydrophobized fiber cement test samples (samples 10 to 16) and an uncoated non-hydrophobized air-cured fiber cement reference sample (sample 9). The water absorption was measured using a capillary water absorption test as further described herein.

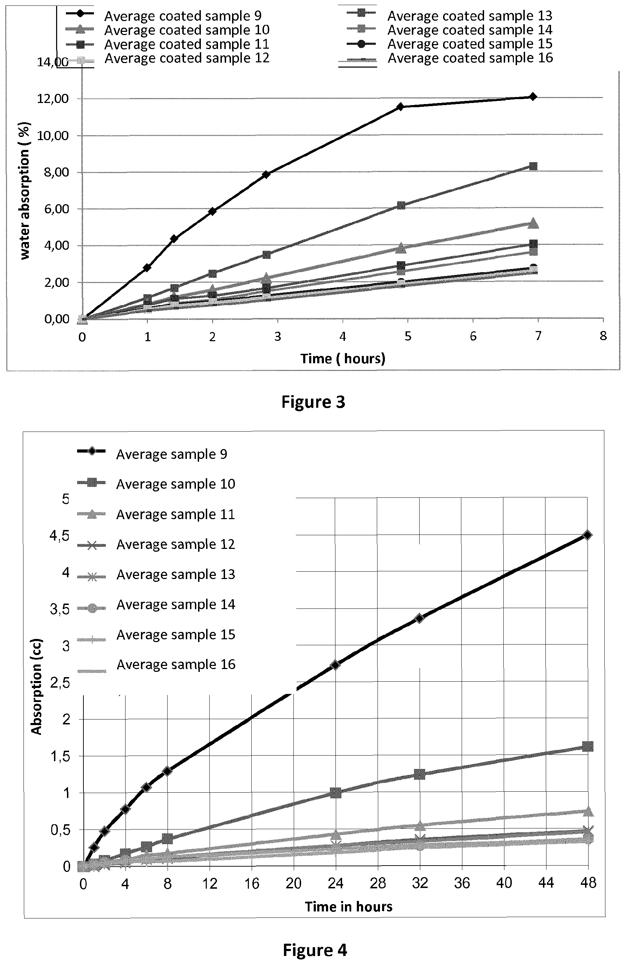

**Figure 3****:** shows a graph representing the amount of water absorption (expressed as the percentage (%) of weight increase of a sample) in function of time for 8 different coated air-cured hydrophobized fiber cement test samples (samples 10 to 16) and an coated non-hydrophobized air-cured fiber cement reference sample (sample 9). The water absorption was measured using a capillary water absorption test as further described herein.
**Figure 4****:** shows a graph representing the amount of water absorption (cc) in function of time for 8 different uncoated air-cured hydrophobized fiber cement test samples (samples 10 to 16) and an uncoated non-hydrophobized air-cured fiber cement reference sample (sample 9). The water absorption was measured using a Karsten test as further described herein.

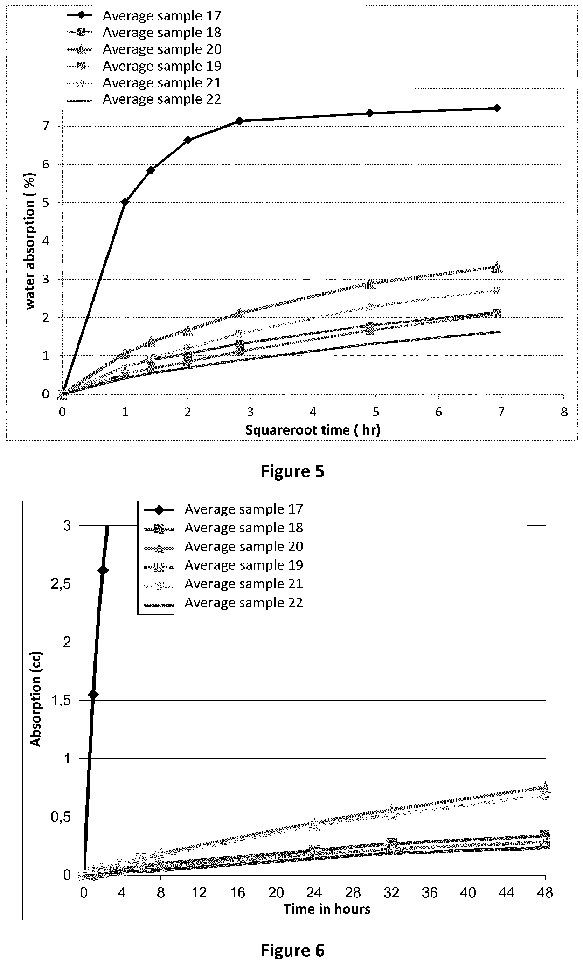

**Figure 5****:** shows a graph representing the amount of water absorption (expressed as the percentage (%) of weight increase of a sample) in function of time for 3 different uncoated air-cured hydrophobized fiber cement test samples (samples 18, 19 and 22) and 3 uncoated air-cured fiber cement reference samples (sample 17, 21 and 22). The reference samples were either non-hydrophobized (sample 17) or hydrophobized with a non-silicone resin hydrophobizing agent, i.e. a modified silane (sample 21) or a modified siloxane (sample 22). The water absorption was measured using a capillary water absorption test as further described herein.
**Figure 6****:** shows a graph representing the amount of water absorption (cc) in function of time for 3 different uncoated air-cured hydrophobized fiber cement test samples (samples 18, 19 and 22) and 3 uncoated air-cured fiber cement reference samples (sample 17, 21 and 22). The reference samples were either non-hydrophobized (sample 17) or hydrophobized with a non-silicone resin hydrophobizing agent, i.e. a modified silane (sample 21) or a modified siloxane (sample 22). The water absorption was measured using a Karsten test as further described herein.

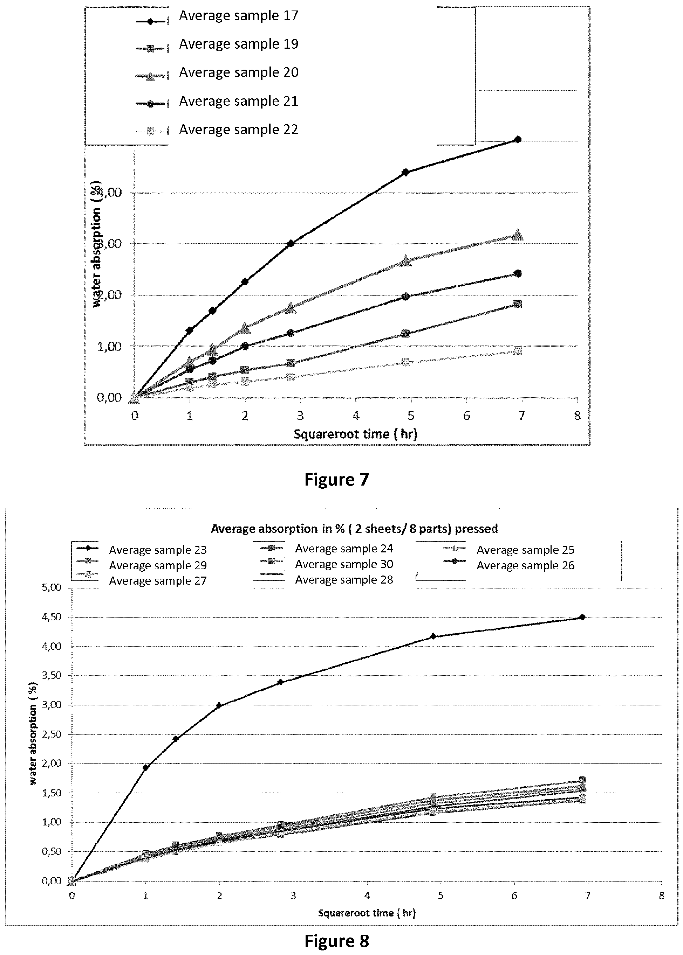

**Figure 7****:** shows a graph representing the amount of water absorption (expressed as the percentage (%) of weight increase of a sample) in function of time for 3 different coated air-cured hydrophobized fiber cement test samples (samples 18, 19 and 22) and 3 coated air-cured fiber cement reference samples (sample 17, 21 and 22). The reference samples were either non-hydrophobized (sample 17) or hydrophobized with a non-silicone resin hydrophobizing agent, i.e. a modified silane (sample 21) or a modified siloxane (sample 22). The water absorption was measured using a capillary water absorption test as further described herein.
**Figure 8****:** shows a graph representing the water absorption (expressed as the percentage (%) of weight increase of a sample) in function of time for 7 different uncoated air-cured hydrophobized fiber cement test samples (samples 24 to 30), which were hydrophobized according to the methods of the invention, and an uncoated non-hydrophobized air-cured fiber cement reference sample (sample 23). The water absorption was measured using a capillary water absorption test as further described herein.

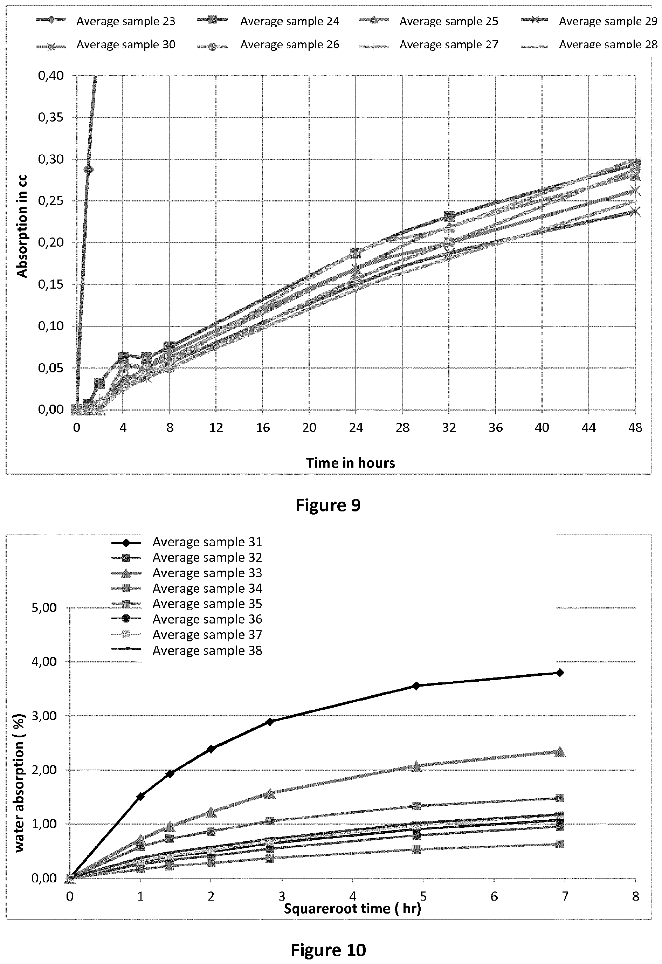

**Figure 9****:** shows a graph representing the water absorption (cc) in function of time for 7 different uncoated air-cured hydrophobized fiber cement test samples (samples 24 to 30), which were hydrophobized according to the methods of the invention, and an uncoated non-hydrophobized air-cured fiber cement reference sample (sample 23). The water absorption was measured using a Karsten test as further described herein.
**Figure 10****:** shows a graph representing the water absorption (expressed as the percentage (%) of weight increase of a sample) in function of time for 7 different uncoated air-cured hydrophobized fiber cement test samples (samples 32 to 38), which were hydrophobized according to the methods of the invention, and an uncoated non-hydrophobized air-cured fiber cement reference sample (sample 31). The water absorption was measured using a capillary water absorption test as further described herein.

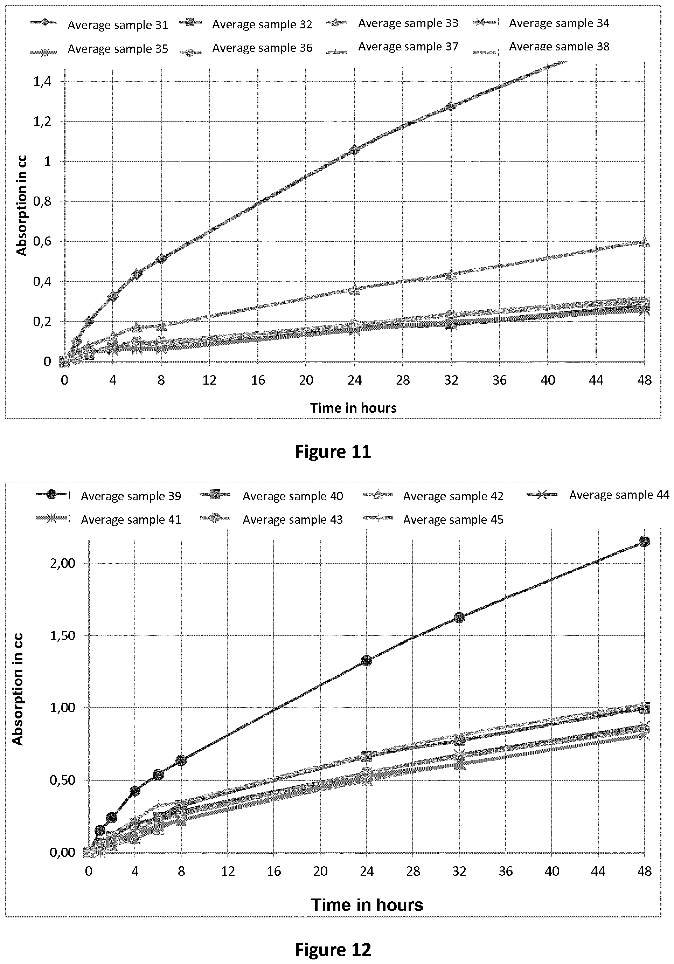

**Figure 11****:** shows a graph representing the water absorption (cc) in function of time for 7 different uncoated air-cured hydrophobized fiber cement test samples (samples 32 to 38), which were hydrophobized according to the methods of the invention, and an uncoated non-hydrophobized air-cured fiber cement reference sample (sample 31). The water absorption was measured using a Karsten test as further described herein.
**Figure 12****:** shows a graph representing the water absorption (cc) in function of time for 6 different uncoated autoclave-cured hydrophobized fiber cement test samples (samples 40 to 45), which were hydrophobized according to the methods of the invention, and an uncoated non-hydrophobized autoclave-cured fiber cement reference sample (sample 39). The water absorption was measured using **a** Karsten test as further described herein.

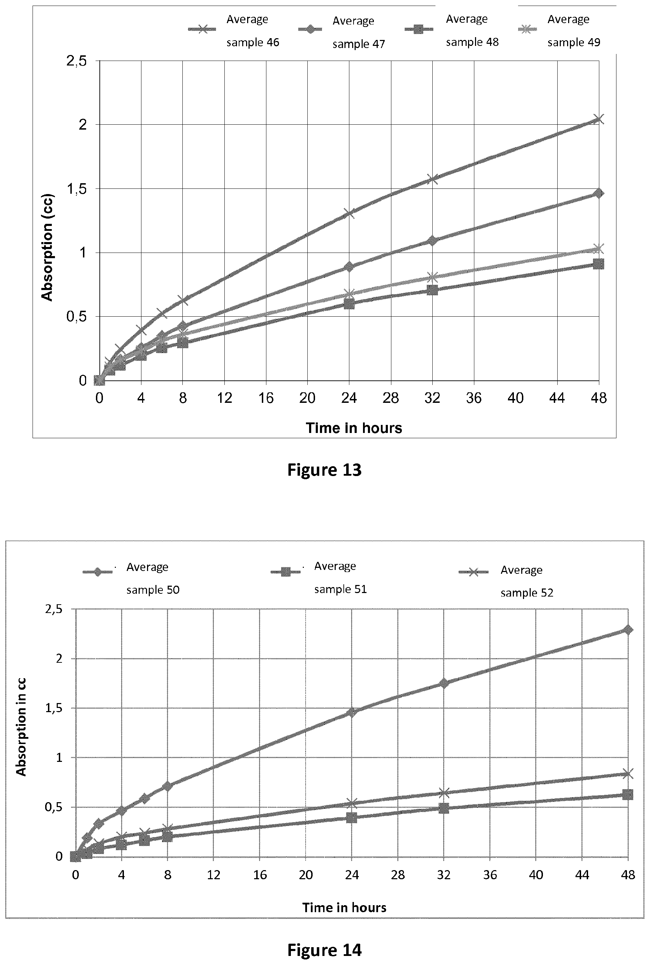

**Figure 13****:** shows a graph representing the water absorption (cc) in function of time for 3 different uncoated autoclave-cured hydrophobized fiber cement test samples (samples 47 to 49), which were hydrophobized according to the methods of the invention, and an uncoated non-hydrophobized autoclave-cured fiber cement reference sample (sample 46). The water absorption was measured using a Karsten test as further described herein.
**Figure 14****:** shows a graph representing the water absorption (cc) in function of time for 2 different uncoated autoclave-cured hydrophobized fiber cement test samples (samples 51 and 52), which were hydrophobized according to the methods of the invention, and an uncoated non-hydrophobized autoclave-cured fiber cement reference sample (sample 50). The water absorption was measured using a Karsten test as further described herein.

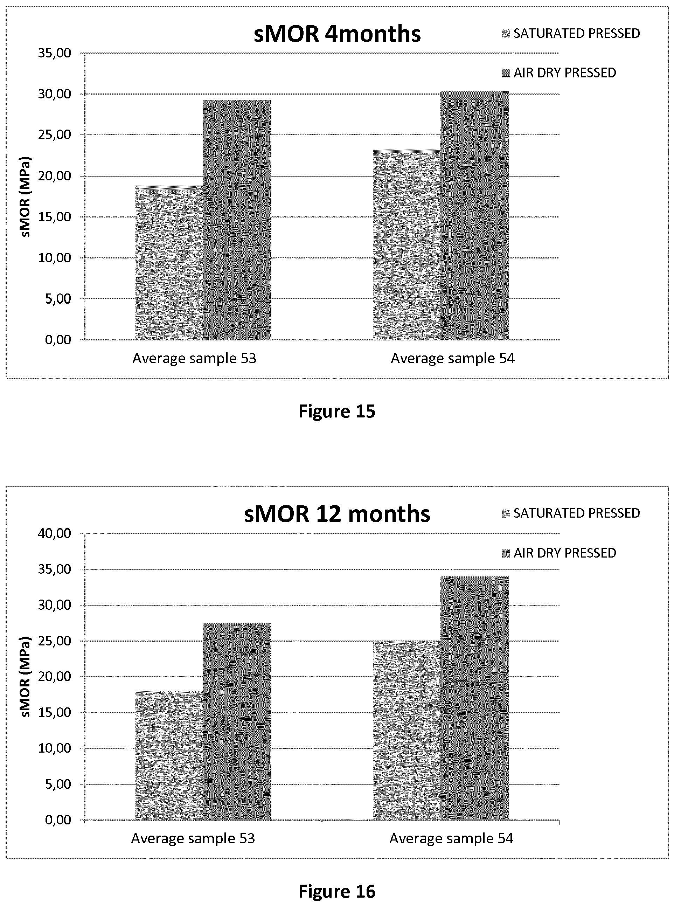

**Figure 15****:** represents the flexural strength (modulus of rupture; sMOR), as measured after 4 months, of an uncoated air-cured hydrophobized fiber cement test sample, which was hydrophobized according to the methods of the invention (samples 53) and an uncoated air-cured non-hydrophobized fiber cement reference sample (sample 54). The modulus of rupture (MOR; expressed in Pa= kg/m.s²) was measured by making use of a UTS/INSTRON apparatus (type 3345; cel=5000N).
**Figure 16****:** represents the flexural strength (modulus of rupture; sMOR), as measured after 12 months, of an uncoated air-cured hydrophobized fiber cement test sample, which was hydrophobized according to the methods of the invention (samples 53) and an uncoated air-cured non-hydrophobized fiber cement reference sample (sample 54). The modulus of rupture (MOR; expressed in Pa= kg/m.s²) was measured by making use of a UTS/INSTRON apparatus (type 3345; cel=5000N).

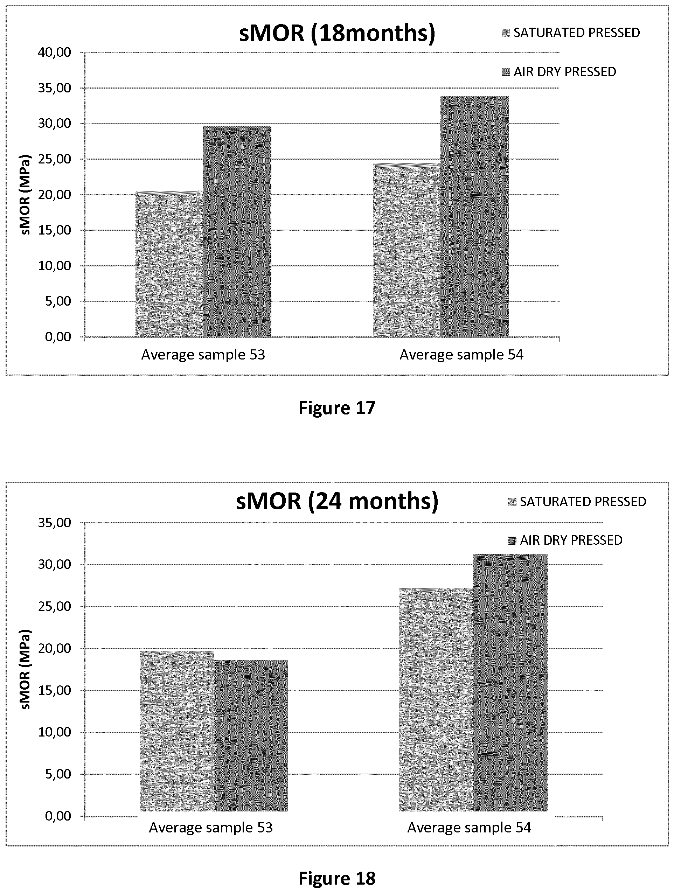

**Figure 17****:** represents the flexural strength (modulus of rupture; sMOR), as measured after 18 months, of an uncoated air-cured hydrophobized fiber cement test sample, which was hydrophobized according to the methods of the invention (samples 53) and an uncoated air-cured non-hydrophobized fiber cement reference sample (sample 54). The modulus of rupture (MOR; expressed in Pa= kg/m.s²) was measured by making use of a UTS/INSTRON apparatus (type 3345; cel=5000N).
**Figure 18****:** represents the flexural strength (modulus of rupture; sMOR), as measured after 24 months, of an uncoated air-cured hydrophobized fiber cement test sample, which was hydrophobized according to the methods of the invention (samples 53) and an uncoated air-cured non-hydrophobized fiber cement reference sample (sample 54). The modulus of rupture (MOR; expressed in Pa= kg/m.s²) was measured by making use of a UTS/INSTRON apparatus (type 3345; cel=5000N).

The same reference signs refer to the same, similar or analogous elements in the different figures.

### Description of illustrative embodiments

The present invention will be described with respect to particular embodiments.

It is to be noted that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

The following terms are provided solely to aid in the understanding of the invention.

As used herein, the singular forms "a", "an", and "the" include both singular and plural referents unless the context clearly dictates otherwise.
The terms "comprising", "comprises" and "comprised of" as used herein are synonymous with "including", "includes" or "containing", "contains", and are inclusive or open-ended and do not exclude additional, non-recited members, elements or method steps.

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

The terms "(fiber) cementitious slurry" or "(fiber) cement slurry" as referred to herein generally refer to slurries at least comprising water, fibers and cement. The fiber cement slurry as used in the context of the present invention may also further comprise other components, such as but not limited to, limestone, chalk, quick lime, slaked or hydrated lime, ground sand, silica sand flour, quartz flour, amorphous silica, condensed silica fume, microsilica, metakaolin, wollastonite, mica, perlite, vermiculite, aluminum hydroxide, pigments, anti-foaming agents, flocculants, and other additives. In the context of the processes of the present invention, the fiber cement slurry can thus be provided by one or more sources of at least cement, water and fibers. Optionally, these one or more sources of at least cement, water and fibers may operatively be connected to a continuous mixing device constructed so as to form a cementitious fiber cement slurry. In particular embodiments, when using cellulose fibers or the equivalent of waste paper fibers, a minimum of about 2wt%, such as at least about 3wt%, such as at least about 4wt% of these cellulose fibers (compared to the total initial dry weight of the slurry) may be used. In further particular embodiments, when exclusively cellulose fibers are used, between about 4wt% to about 12wt%, such as more particularly, between about 7wt% and about 10wt% of these cellulose fibers (compared to the total initial dry weight of the slurry) may be used. If cellulose fibers are replaced by short mineral fibers such as rock wool, it is most advantageous to replace them in a proportion of 1.5 to 3 times the weight, in order to maintain approximately the same content per volume. In long and cut fibers, such as glass fiber rovings or synthetic high-module fibers, such as polypropylene, polyvinyl acetate, polycarbonate or acrylonitrile fibers the proportion can be lower than the proportion of the replaced cellulose fibers. The fineness of the fibers (measured in Shopper-Riegler degrees) is in principle not critical to the processes of the invention. Yet in particular embodiments, where autoclave-cured fiber cement products are envisaged, it has been found that a range between about 15 DEG SR and about 45 DEG SR can be particularly advantageous for the processes of the invention. In alternative embodiments, where air-cured fiber cement products are envisaged, it has been found that a range between about 35 DEG SR and about 75 DEG SR can be particularly advantageous for the processes of the invention.

"Fiber(s)" present in the fiber cement slurry as described herein may be for example process fibers and/or reinforcing fibers which both may be organic fibers (typically cellulose fibers) or synthetic fibers (polyvinylalcohol, polyacrilonitrile, polypropylene, polyamide, polyester, polycarbonate, etc.).

"Cement" present in the fiber cement slurry as described herein may be for example but is not limited to Portland cement, cement with high alumina content, Portland cement of iron, trass-cement, slag cement, plaster, calcium silicates formed by autoclave treatment and combinations of particular binders. In more particular embodiments, cement in the products of the invention is Portland cement.

The terms "predetermined" and "predefined" as used herein when referring to one or more parameters or properties generally, and particularly in the context of the present invention, mean that the desired value(s) of these parameters or properties have been determined or defined beforehand, i.e. prior to the start of the process for producing the products that are characterized by one or more of these parameters or properties.

The term "fiber cement layer" as used herein generally, and particularly in the context of the present invention, refers to any flat, optionally substantially rectangular, layer or cake essentially consisting of a fiber cement composition and having a thickness of at least about 1 mm, in particular between about 1 mm and 200 mm, more particularly between about 2 mm and about 150 mm, most particularly between about 4 mm and about 100 mm, such as between about 8 mm and about 10 mm.

A "Hatschek fiber cement layer" or a "Hatschek layer" as interchangeably used herein refers to a fiber cement layer (as defined herein), which is produced according to a Hatschek process, which at least comprises the steps of:
(i) building a fiber cement film on a sieve, which sieve rotates so as to be in contact with a fiber cement slurry in a vat;
(ii) transferring the fiber cement film from the sieve to the felt transport belt, and
(iii) accumulating the fiber cement film on an accumulator roll via the felt transport belt.

A "(fiber cement) sheet" as used herein, also referred to as a panel or a plate, is to be understood as a flat, usually rectangular element, a fiber cement panel or fiber cement sheet being provided out of fiber cement material. The panel or sheet has two main faces or surfaces, being the surfaces with the largest surface area. The sheet can be used to provide an outer surface to walls, both internal as well as external a building or construction, e.g. as façade plate, siding, corrugated sheet etc.

The terms "hydrophobize", "hydrophobizing", "hydrophobation", "hydrophobizing agent", "hydrophobizing agent", "hydrophobating agent" and/or "hydrophobic agent" as used interchangeably herein, generally, and particularly in the context of the present invention, refer to the water-repellent effect of certain agents and/or to water-repellent agents, which can be used or applied on objects, surfaces, materials or compositions, and especially on hydrophilic inorganic surfaces, such as cement, fiber cement, concrete, inorganic powders, minerals and fillers, and the like in order to impart these objects, surfaces, materials or compositions and the like with water-repellent properties.

Generally, the term "hydrophobized fiber cement product" refers to fiber cement products, which have been treated, either partially or completely before, during or after their production, with a hydrophobizing (or hydrophobic) agent. In particular, a "hydrophobized fiber cement product" or a "hydrophobized fiber cement sheet" as used herein will comprise at least one "hydrophobized fiber cement layer".
In the context of the present invention, and unless otherwise explicitly specified herein, when referring to a "hydrophobized fiber cement product", it is intended to refer to a fiber cement product which has been hydrophobized "in-mass", meaning that prior to manufacturing the fiber cement product, at least one hydrophobizing agent has been added and has been uniformly dispersed into the fiber cement slurry, which slurry is then used as the raw material for the production of the fiber cement product.

A "non-hydrophobized (fiber cement) product" or a "non-hydrophobized fiber cement (film) layer" as used in the present context refers to a product, such as a fiber cement product or a fiber cement (film) layer, which has not been treated with a hydrophobizing agent.
The invention will now be further explained in detail with reference to various embodiments. It will be understood that each embodiment is provided by way of example and is in no way limiting to the scope of the invention. In this respect, it will be clear to those skilled in the art that various modifications and variations can be made to the present invention without departing from the scope or spirit of the invention. For instance, features illustrated or described as part of one embodiment, can be used in another embodiment to yield a still further embodiment. Thus, it is intended that the present invention covers such modifications and variations as encompassed within the scope of the appended claims and equivalents thereof.

In a first aspect, the present invention provides hydrophobized fiber cement products, comprising a fiber cementitious matrix and a hydrophobizing agent, wherein the hydrophobizing agent comprises at least one silicone resin (as more fully described hereinafter).

In particular embodiments, the hydrophobizing agent comprises from 20% to 50% of hydrophobic silicone resin based on the weight percent of hydrophobic silicone resin versus the total weight of hydrophobizing agent. In further particular embodiments, the hydrophobizing agent comprises about 20%, about 25%, about 30%, about 35%, about 40%, about 45%, or about 50% of hydrophobic silicone resin based on the weight percent of hydrophobic silicone resin versus the total weight of hydrophobizing agent.

The present inventors have found that the at least one silicone resin used in the products of the present invention is highly stable and disperses well and uniformly in the cementitious matrix, in contrast with the known conventional silanes and siloxanes, which are less water-insoluble. Moreover, the at least one silicone resin used in the products of the present invention is less sensitive and more stable in relation to alkaline medium and or alkaline temperature in comparison with other known hydrophobizing agents. It has also been surprisingly discovered that very complete hydrophobization of fiber cement products can be accomplished with the use of only minor amounts of the hydrophobic silicone resin.

Silicone resins are well known in the art. The term "silicone resin" as referred to herein refers to hydrophobic silicone resins, preferably but not necessarily in the liquid form, which may optionally be used together with minor amounts of dispersion aids. These dispersion aids may include, for example, surfactants, inorganic dispersants such as partly water-wettable silica, or co-liquid continuous phase components, in particular minor amounts of water miscible organic solvents such as alcohols, ketones, and esters.
The hydrophobic silicone resins of the present invention have the general formula of MnDoTpQq, where M, D, T, and Q have their art recognized meanings, and reflect the starting silanes which are used to prepare the hydrophobic silicone resins. These silane starting materials, depending upon the particular method of resin preparation, are generally chlorosilanes or alkoxysilanes. Examples of M, D, T, and Q silanes are, respectively, R₃SiX (M), R₂SiX₂ (D), RSiX₃ (T), and SiX₄ (Q), where X is a hydrolyzable group, generally a chloro, methoxy, or ethoxy group, and R is a hydrocarbon group, preferably a C₁-₂₀ hydrocarbon group, which may, for example, be alkyl, alkenyl, cycloalkyl, cycloalkenyl, aryl, alkaryl, arylalkyl, etc. The hydrocarbon groups may be substituted, for example, by chloro or cyano groups, and in the case of R groups containing more than two carbon atoms, may contain non-adjacent O or N atoms interposed within the hydrocarbon chain, examples of which are the 2- methoxyethyl and 2-ethoxylethyl radicals.

The values of n, o, p, and q may be considered as relative numbers which reflect the relative amounts of M, D, T, and Q units in the hydrophobic silicone resins. In general, it is undesirable to have a very large proportion of D units or di- functional units, as these units in general decrease the melting point of the resin and lower the resin melt viscosity, however the presence of D units is preferred, as are also T units. For dimethyl D units, the amount is preferably less than 5%, and in the case of phenylmethyl D units, no more than 29% by weight. In any case, the D units should not be present in an amount which causes the resulting hydrophobic silicone resin (s) to be fluid. Thus, suitable resins may be designated as MT resins, MQ resins, DT resins, MQT resins, or combinations thereof. In certain particular instances, the at least one hydrophobic silicone resin is a DT resin, although the DT resin may contain residual M units and Q units as well.
Particular embodiments, the hydrophobic silicone resin is a DT resin. The D units of the DT resin network are preferably present in an amount of no more than 30 percent by weight, preferably no more than 15 percent by weight, yet more preferably no more than 10 percent by weight, and most preferably about 0.5 to 4 percent by weight of the total weight of the hydrophobic silicone resin(s). Pure T resins of a general formula of (RSiX₁₋₅)n and particularly of the formula of (RSiO₁₋₅)n tend to be crystalline, have a relatively high glass transition point and are therefore brittle solids. As such, pure T resins tend not to incorporate uniformly into a matrix and thus are not useful in the present invention, unless used in conjunction with DT resins.

Preferred R groups are those which are relatively stable under the generally alkaline processing conditions and at the autoclaving temperature. For these reasons, alkyl groups, preferably C₁₋₈ alkyl groups, and phenyl groups are preferred. Methyl groups are particularly preferred. Resins with exclusively methyl or phenyl R groups are generally termed methyl resins and phenyl resins, respectively, while resins which contain both methyl and phenyl R groups may be termed methylphenyl resins. Higher alkyl groups such as C₁₋₂₀ alkyl groups, cycloalkyl groups, alkenyl groups, and the like are also possible.

Hydrophobic silicone resins according to one or more embodiments of the present invention are substantially insoluble in water and in general soluble in organic solvents such as aromatics, esters, ketones, and paraffinic hydrocarbons. As used herein and unless otherwise noted, the term "substantially insoluble in water" refers to the extent of hydrophobicity of the hydrophobic silicone resins, wherein the maximum weight percent of the hydrophobic silicone resins per total weight of the resulting water mixture at equilibrium in order of increasing preference, is no greater than 10 weight percent, 8 weight percent, 6 weight percent, 4 weight percent, 2 weight percent, or 0.5 weight percent. In certain instances, the maximum weight percent is no greater than 2 weight percent and in certain other instances no greater than 0.5 weight percent.
Hydrophobic silicone resins may be prepared by methods known in organosilicon chemistry, for example as disclosed in CHEMISTRY AND TECHNOLOGY OF SILICONES, Academic Press, by Walter Noll © 1968. Preferred resins are the DT resins containing alkoxy groups.
In particular embodiments, the hydrophobic silicone resins comprised in the hydrophobizing agents for use in the fiber cement products of the present invention are chosen from the group consisting of alkyl-modified silicone resin fluids, alkyl-functionalized silicone resins, alkoxy-functionalized silicone resins and methoxy-functional methyl-phenyl polysiloxanes.
In further particular embodiments, suitable hydrophobic silicone resins for use in the hydrophobizing agents for the production of hydrophobized fiber cement products according to the present invention include but are not limited to SILRES® BS 066 (Wacker Chemie), SILRES^{®} BS 030 (Wacker Chemie), SILRES^{®} BS 017 (Wacker Chemie), SILRES^{®} IC 678 (Wacker Chemie), SILRES^{®} IC 368 (Wacker Chemie), Z6289 (Dow Corning), BY 16-846 (Dow Corning Toray), SF 8416 (Dow Corning Toray), Silikophen^{®} silicone resins (Evonik) and/or Silikoftal^{®} silicone-polyester resins (Evonik).

The hydrophobic silicone resins may be used in conjunction with one or more auxiliary hydrophobizing agents, and as a result, lower amounts of the hydrophobic silicone resins than those described above may be useful. Auxiliary hydrophobizing agents should be non-migratable under autoclaving conditions and under exposure conditions. They should also not interfere with the binding of the inorganic matrix. Examples include long chain fatty acids and amides and the like.

It has been surprisingly discovered that the hydrophobizing agents comprising a liquid silicone resin according to the present invention ensure a significant reduction of water absorption by the fiber cement products in which they are used compared to the effect of known hydrophobizing agents in fiber cement products. In fact, a complete and uniform in-mass hydrophobization of fiber cement products can be accomplished with the use of only minor amounts (i.e. low doses) of the hydrophobizing agent according to the present invention. Other known hydrophobizing agents have not been shown capable of achieving the same results.

Moreover, it has been observed that the hydrophobized fiber cement products of the present invention show a significantly higher mechanical strength in comparison with non-hydrophobized fiber cement products.
These, and other advantageous properties of the products of the invention will become clear from the examples as disclosed hereinafter.

In particular embodiments, the hydrophobizing agent of the present invention may also further comprise a water-soluble or water-dispersible binder material. Such materials are known in the literature and have been described in a number of publications. They are preferably materials which at room temperature, i.e. from 20 to 25°C, have a waxy, highly viscous or solid consistency and have a melting point of from 25 to 150°C. Examples of suitable water-soluble or water-dispersible binder materials include polyvinyl alcohols, methyl cellulose, carboxy methyl cellulose, polyoxyethylene waxes and other film forming polymers. It is preferred that the binder material is actually water soluble. Most preferably its water solubility should be such that it does not interfere with the hydration process of the cementitious material when water is added to that prior to its application or use.

In particular embodiments, the hydrophobizing agent comprised in the fiber cement products of the present invention further comprises a carrier onto which the silicone resin is adsorbed.
The presence of such a carrier may further assist in retaining the silicone resin within the mass of the fiber cement product during the production process and thus helps to prevent that the resin is flushed away with the process water. Moreover, the carrier may help to ensure a highly uniform distribution of the hydrophobizing agent throughout the entire internal structure of the fiber cement product.
The hydrophobic silicone resin is uniformly dispersed throughout the matrix of the fiber cement products, preferably such that there is no more than a 20 percent difference and preferably no more than a 10 percent in amount between any two equivalent volume regions within the product. The uniformity can be tested by visual inspection, such that regions of substantially different appearance are not detected, and also by applying drops of water to various positions on a cut surface, and measuring the degree of water absorption. In general, the minimum size of areas tested will be approximately 1 cm x 1 cm when areal uniformity is measured, and 1 cm x 1 cm x 1 cm when volume uniformity is measured.

Carriers comprised in the hydrophobizing agents of the present invention can be water-soluble, water-insoluble or water-dispersible.

In particular embodiments, the carriers comprised in the hydrophobizing agents of the present invention are chosen from the group consisting of zeolites, starch, native starch, methyl cellulose, carboxy methyl cellulose, cement, sand, silica, silica fume, fly ash, alumino silicates, clay materials (such as but not limited to kaolin), lime, limestone, calcium carbonates, polystyrene beads and polyacrylate beads.

In particular embodiments, the carrier to which the silicone resin is adsorbed is characterized by a specific surface of between 1 m²/g and 800 m²/g, such as between 5 m²/g and 800 m²/g. In further particular embodiments, where the carrier is a zeolite, the carrier to which the silicone resin is adsorbed is characterized by a specific surface of between 1 m²/g and 100 m²/g. In yet further particular embodiments, where the carrier is a kaolinite, the carrier to which the silicone resin is adsorbed is characterized by a specific surface of between 5 m²/g and 40 m²/g. In still further particular embodiments, where the carrier is illite, the carrier to which the silicone resin is adsorbed is characterized by a specific surface of between 80 m²/g and 100 m²/g. In other particular embodiments, where the carrier is montmorbirite, the carrier to which the silicone resin is adsorbed is characterized by a specific surface of between 400 m²/g and 450 m²/g. In yet other particular embodiments, where the carrier is cement, the carrier to which the silicone resin is adsorbed is characterized by a specific surface of between 20 m²/g and 800 m²/g. In yet other particular embodiments, where the carrier is limestone, the carrier to which the silicone resin is adsorbed is characterized by a specific surface of between 1 m²/g and 5 m²/g.

In particular embodiments, where the carrier is in the form of particles or beads, it has average dimensions of between 0.1 µm and 400 µm diameter.

In particular embodiments, the hydrophobizing agent comprises from 10 to 60%, preferably from 20 to 50%, more preferably from 25 to 45% by weight of the silicone resin to the total weight of the hydrophobizing agent.
In further particular embodiments, the weight ratio of carrier to the weight of silicone resin components in the hydrophobizing agents of the present invention is the range from 2/1 to 9/1, more preferably 2/1 to 5/1, such as for example 3/1.
Although the hydrophobizing agent essentially comprises a silicone resin and a carrier component, additional ingredients may be included also. Optional additional ingredients may include organic hydrophobizing agents, viscosity modifiers, surfactants, pigments, colorants, preservatives, gelling agents, pH modifiers, buffers, accelerators, retarders, air entrainers and fillers, e.g. silica and titanium dioxide. It is however preferred that the optional ingredients do not comprise more than 5% by weight of the total weight of the agent.

The amount of hydrophobic silicone resin which is present in the cementitious materials according to the invention ranges from 0.01 to 5% by weight (% of active ingredient based on the mass of the solid materials). In particular embodiments, the amount of hydrophobic silicone resin which is present in the cementitious materials according to the invention ranges from 0.05 to 2% by weight, more particularly from 0.1 to 0.5% by weight (% of active ingredient based on the mass of the solid materials).

In certain particular embodiments, the hydrophobizing agent as used in the present invention may be prepared by a granulation process. In a granulation process the silicone resin component is deposited in its liquid form onto a carrier thus forming a free flowing solid powder.
An example of a granulating process by which the hydrophobizing agents according to the present invention may be produced comprises the steps of, where necessary, heating the silicone resin component to give a liquid material, either separately or in admixture, e.g. as a flowable slurry, which is then deposited onto the carrier particles, e.g. in a fluid bed, thus causing the silicone resin component to solidify, e.g. through cooling or through the evaporation of a solvent, onto the carrier and form a free flowing powder.
The granulation process ensures that the silicone resin is contacted with and deposited onto the carrier in its liquid phase. For example, the silicone resin material (and optionally binder material) are sprayed into a drum mixer containing the carrier. On spraying, small liquid droplets are formed containing the silicone resin material (and optionally the binder material). The droplets partially cool down on contact with the carrier particles. After mixing is complete the partially cooled particles are transferred to a fluidised bed where cooling is completed with ambient air. The finely divided particles of hydrophobizing agent are then collected directly from the fluidised bed.
In a second aspect, the present invention provides processes for producing a hydrophobized fiber cement products with enhanced water impermeability, wherein the processes comprise at least the steps of:
a) hydrophobizing an inorganic curable cementitious matrix with a hydrophobizing agent at least comprising a carrier onto which a hydrophobic silicone resin is adsorbed,
b) transforming the curable mixture into a shaped body; and
c) curing the curable mixture to form a uniformly hydrophobized fiber cement product.

The inorganic curable cementitious matrix is a curable fiber cement slurry or the like. Dependent to some extent on the curing process used , the fiber cement slurry typically comprises water, process or reinforcing fibers which are synthetic organic fibers (and optionally also natural organic fibers, such as cellulose), cement (e.g. Portland cement), limestone, chalk, quick lime, slaked or hydrated lime, ground sand, silica sand flour, quartz flour, amorphous silica, condensed silica fume, microsilica, kaolin, metakaolin, wollastonite, mica, perlite, vermiculite, aluminum hydroxide (ATH), pigments, anti-foaming agents, flocculants, and/or other agents. Optionally a color agent (e.g. pigments) are added, to obtain a fiber cement product which is so-called colored in the mass.

In particular embodiments of the methods according to the invention, step a) of hydrophobizing the inorganic curable cementitious matrix with a hydrophobizing agent at least comprises:
admixing an inorganic curable cementitious matrix with a hydrophobizing agent comprising a carrier onto which a hydrophobic silicone resin is adsorbed.
In these particular embodiments, the carrier may be, without limitation, a zeolite, starch, native starch, methyl cellulose, carboxy methyl cellulose, cement, sand, silica, silica fume, fly ash, alumino silicates, clay materials (such as but not limited to kaolin), lime, calcium carbonates, polystyrene beads and polyacrylate beads.

In other particular embodiments of the methods according to the invention, the inorganic curable cementitious matrix at least comprises a carrier suitable for adsorbing a hydrophobic silicone resin. In these specific embodiments, step a) of hydrophobizing the inorganic curable cementitious matrix with a hydrophobizing agent at least comprises:
admixing an inorganic curable cementitious matrix, which matrix comprises a carrier, with a hydrophobic silicone resin so as to adsorb the silicone resin onto the carrier and so as to form a hydrophobized inorganic curable cementitious matrix comprising a hydrophobizing agent comprising the carrier onto which the hydrophobic silicone resin is adsorbed.
In these particular embodiments, the carrier may be, without limitation, a zeolite, starch, native starch, methyl cellulose, carboxy methyl cellulose, cement, sand, silica, silica fume, fly ash, alumino silicates, clay materials (such as but not limited to kaolin), lime, calcium carbonates, polystyrene beads and polyacrylate beads.

In particular embodiments of the methods of the present invention, the step of admixing is preferably implemented within a time period between 1.5 to 12 hours. After mixing, the inorganic curable matrix may, when necessary, be sufficiently cooled such that the hydrophobic silicone resin (s) remain stable when admixed into the inorganic curable matrix. The mixing is optionally facilitated with an accumulative addition of water, whereas the total amount of water is between 2 to 30 percent by weight of the total weight of the inorganic curable matrix. The water is added to hydrate lime or quicklime included within the material matrix. The admixing step further includes admixing an agent to the mixture, wherein the agent illustratively includes color pigments, aeration agents, ancillary hydrophobizing agents, or any combinations thereof.
In one embodiment, the hydrophobic silicone resins are added after a time period during which two or more reactive building material ingredients are combined to form the inorganic curable matrix. Substantial amount of heat may be generated through the formation of the inorganic curable matrix, for example when silica sand and lime are combined with water, and the silicone resins are preferably added later to avoid alkalinity attack at the temperature established by the exothermic reaction. The time period during which the material matrix is formed and after which the hydrophobic silicone resins or the agents are added may vary widely, for example between 0.1 to 30 minutes, preferably between 0.5 to 20 minutes, and more preferably between 1 to 15 minutes. Other agents may be added after the inorganic curable matrix is formed and optionally be added along with the addition of the hydrophobic silicone resins.

The second step of the processes according to the invention comprises transforming the curable mixture into a shaped body, i.e. a shaped fiber cement material.
Fiber cement products, such as fiber cement plates or fiber cement sheets or fiber cement panels usually are made using the well-known Hatschek-process, flow-on process or Magnani-process or combinations thereof. According to some embodiments of the invention, the uncured fiber cement product may be obtained using a Hatschek process.

The third step of the processes according to the invention comprises curing the curable mixture to form a uniformly hydrophobized fiber cement product.
After production, fiber cement products can be allowed to cure over a time in the environment in which they are formed, or alternatively can be subjected to a thermal cure (e.g. by autoclaving or the like).
In particular embodiments, the "green" fiber cement product, after being made by the Hatschek-process (or flow-on process or Magnani-process or combinations thereof), is cured, typically by curing to the air (air cured fiber cement products) or under pressure in presence of steam and increased temperature (autoclave cured). For autoclave cured products, typically sand is added to the original fiber cement slurry. The autoclave curing in principle results in the presence of 11.3 Å (angstrom) Tobermorite in the fiber cement product.

In further particular embodiments, the "green" fiber cement product, after being made by the Hatschek-process (or flow-on process or Magnani-process or combinations thereof), may be first pre-cured to the air, after which the pre-cured product is further air-cured until it has its final strength, or autoclave-cured using pressure and steam, to give the product its final properties.

After curing, the fiber cement product being a panel, sheet or plate, may still comprise a significant weight of water, present as humidity. This may be up to 10 even 15 %w, expressed per weight of the dry product. The weight of dry product is defined as the weight of the product when the product is subjected to drying at 105°C in a ventilated furnace, until a constant weight is obtained.
In certain embodiments, the fiber cement product is dried. Such drying is done preferably by air drying and is terminated when the weight percentage of humidity of the fiber cement product is less than or equal to 8 weight %, even less than or equal to 6 weight %, expressed per weight of dry product, and most preferably between 4 weight % and 6 weight %, inclusive.

In a third aspect, the present invention provides hydrophobized fiber cement products obtainable by the processes according to the invention.

Fiber cement products as referred to herein include roof or wall covering products made out of fiber cement, such as fiber cement tiles, fiber cement slates, fiber cement sidings, fiber cement boards, flat fiber cement sheets, corrugated fiber cement sheets and the like.

According to particular embodiments, the fiber cement products according to the invention can be roofing or façade elements, flat sheets or corrugated sheets.
In certain particular embodiments, the polypropylene fibers of the present invention are particularly suited for the manufacture of corrugated fiber cement sheets.
According to other particular embodiments, the fiber cement products of the present invention have the shape of a pipe, a tank storage element or any other fiber cement object of any other shape. According to further particular embodiments, the fiber cement products of the present invention are fiber cement sheets, in particular corrugated fiber cement sheets.
A sheet as used herein, also referred to as a panel or a plate, is to be understood as a flat, usually rectangular element, a fiber cement panel or fiber cement sheet being provided out of fiber cement material. The panel or sheet has two main faces or surfaces, being the surfaces with the largest surface area. The sheet can be used to provide an outer surface to walls, both internal as well as external a building or construction, e.g. as façade plate, siding, etc.

According to some embodiments of the invention, the fiber cement product may be an air cured fiber cement product, such as an air cured flat sheet or an air cured corrugated sheet.

The novel in-mass hydrophobized fiber cement products of the present invention exhibit improved structural characteristics as compared to previously known fiber cement products utilizing reinforcement materials, other than the fibers of the present invention.
Indeed, up to now, hydrophobization of fiber cement products in the mass (i.e. where the hydrophobizing agent is uniformly distributed throughout the entire internal mass of the fiber cement product) was not feasible. The reason was that when using conventional hydrophobizing agents in a water-based production process, most of the active hydrophobizing agent migrates from the product into the process water and is lost. Moreover, any remaining active agent, which may still be present within the fiber cement product, was not uniformly dispersed within the internal structure of the end product, and therefore did not provide a sufficient degree of water impermeability. Therefore, up to now, it was not feasible to produce a fiber cement product being sufficiently and uniformly hydrophobic throughout its entire mass and structure.
The inventors have managed to solve this problem by searching for and identifying a hydrophobizing agent, which proved particularly suitable for performing effective in-mass hydrophobization of a fiber cement product, namely an agent comprising at least one silicone resin.

Furthermore, it was found that the hydrophobized fiber cement products of the present invention not only show improved hydrophobic properties over known hydrophobized fiber cement properties but also show significant improvements with regard to mechanical strength.

Without being bound to a specific hypothesis or theory, it may be that that the silicone resin acts as a film around the reinforcing (PP and cellulose) fibers, which are present in the cementitious matrix, and as such protects these fibers from alkaline attack.

Additionally and/or alternatively, but again without being bound to a specific theory, the improved reinforcement characteristics exhibited by the fiber cement products may be due to the fact that the presence of a silicone resin network in the cementitious matrix causes a better entanglement between the fibers and thus an improved strength and impact resistance of the cement material in which these fibers are incorporated.

The fiber cement products of the present invention comprise from about 0.1 to about 5 weight%, such as particularly from about 0.5 to about 4 weight% of fibers, such as more particularly between about 1 to 3 weight% of fibers with respect to the total weight of the fiber cement product.
According to a particular embodiment, the fiber cement product according to the invention is characterized in that it comprises, besides the polypropylene fibers of the invention, other reinforcing fibers, such as cellulose fibers or other inorganic or organic reinforcing fibers in a weight % of about 0.1 to about 5. In particular embodiments, organic fibers are selected from the group consisting of polyvinylalcohol polyacrylonitrile fibers, polyethylene, cellulose fibres (such as wood or annual kraft pulps), polyamide fibers, polyester fibers, aramide fibers and carbon fibers. In further particular embodiments, inorganic fibers are selected from the group consisting of glass fibers, rockwool fibers, slag wool fibers, wollastonite fibers, ceramic fibers and the like.
In further particular embodiments, the fiber cement products of the present invention may comprise fibrils fibrids, such as for example but not limited to, polyolefinic fibrils fibrids % in a weight % of about 0.1 to 3, such as "synthetic wood pulp".

According to certain particular embodiments, the fiber cement products of the present invention comprise 20 to 95 weight % cement as hydraulic binder. Cement in the products of the invention is selected from the group consisting of Portland cement, cement with high alumina content, Portland cement of iron, trass-cement, slag cement, plaster, calcium silicates formed by autoclave treatment and combinations of particular binders. In more particular embodiments, cement in the products of the invention is Portland cement.

According to particular embodiments, the fiber cement products according to the invention optionally comprise further components. These further components in the fiber cement products of the present invention may be selected from the group consisting of fly-ashes, amorphous silica, ground quartz, the ground rock, clays, pigments, metakaolin, blast furnace slag, carbonates, puzzolanas, aluminium hydroxide, wollastonite, mica, perlite, calcium carbonate, etc. The total quantity of such further components is preferably lower than 70 weight % compared to the total initial dry weight of the composition.

Further additives that may be present in the fiber cement products of the present invention may be selected from the group consisting of dispersants, plasticizers, antifoam agents and flocculants. The total quantity of additives is preferably between about 0.1 and about 1 weight % compared to the total initial dry weight of the composition.

Further components that may be present in the fiber cement products of the present invention may be selected from the group consisting of water, sand, silica sand flour, condensed silica fume, microsilica, kaolin, metakaolin, wollastonite, mica, perlite, vermiculite, aluminum hydroxide (ATH), pigments, anti-foaming agents, flocculants, and/or other additives (e.g. colouring additives), each of which are present in suitable amounts depending on the type of the specific fiber cement product and each of which can be determined by the person skilled in the art.

In further particular embodiments, the fiber cement products according to the present invention are fiber concrete products, which further comprises at least one selected from the group consisting of gravel, sand, stone-dust and broken stones.

In a fourth aspect, the present invention provides uses of the fiber cement products and sheets obtainable by the processes according to the present invention, and more particularly uses in the building industry.
Fiber cement products as referred to herein include roof or wall covering products made out of fiber cement, such as fiber cement tiles, fiber cement slates, fiber cement sidings, fiber cement boards, flat fiber cement sheets, corrugated fiber cement sheets and the like.

According to particular embodiments, the fiber cement products according to the invention can be roofing or façade elements, flat sheets or corrugated sheets.

In certain particular embodiments, the polypropylene fibers of the present invention are particularly suited for the manufacture of corrugated fiber cement sheets.

According to other particular embodiments, the fiber cement products of the present invention have the shape of a pipe, a tank storage element or any other fiber cement object of any other shape.

According to further particular embodiments, the fiber cement products of the present invention are fiber cement sheets, in particular corrugated fiber cement sheets.

A sheet as used herein, also referred to as a panel or a plate, is to be understood as a flat, usually rectangular element, a fiber cement panel or fiber cement sheet being provided out of fiber cement material. The panel or sheet has two main faces or surfaces, being the surfaces with the largest surface area. The sheet can be used to provide an outer surface to walls, both internal as well as external a building or construction, e.g. as façade plate, siding, etc.

According to some embodiments of the invention, the fiber cement product may be an air cured fiber cement product, such as an air cured flat sheet or an air cured corrugated sheet.

According to other embodiments of the invention, the fiber cement product may be an autoclave-cured fiber cement product, such as an autoclave-cured flat sheet or an autoclave-cured corrugated sheet.

The invention will now be further illustrated in detail with reference to the following Examples. It is to be understood that although preferred embodiments and/or materials have been discussed for providing embodiments according to the present invention, various modifications or changes may be made without departing from the scope and spirit of this invention.

### EXAMPLES

It will be appreciated that the following examples, given for purposes of illustration, are not to be construed as limiting the scope of this invention. Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention that is defined in the following claims and all equivalents thereto. Further, it is recognized that many embodiments may be conceived that do not achieve all of the advantages of some embodiments, yet the absence of a particular advantage shall not be construed to necessarily mean that such an embodiment is outside the scope of the present invention.

### Example 1: Production of air-cured hydrophobized fiber cement products according to the present invention (first series air-cured samples)

A fiber cement slurry was prepared, comprising polypropylene fibers, cellulose fibers, fly ash, calcium carbonate, and cement, at a consistency of 20 to 23 weight percent of solids in water and was mixed for approximately 15 minutes. The cement slurry was diluted with water to 7 weight percent of solids. To the diluted slurry an anionic polymer flocculation aid and defoamer was added to generate fiber cement solids.

Different test slurry samples were prepared by admixing either (i) about 0.05% to 0.2% by weight of a hydrophobizing agent, which comprises a silicone resin (A) adsorbed to a synthetically prepared zeolite carrier (B) (see samples 2 to 4 in Table 1), or (ii) about 0.05% to 0.15% by weight of a silicone resin (A) (see samples 5 and 6 in Table 1). In the latter case, the cementitious particles in the fiber cement slurry function as a carrier for adsorbing the silicone resin and forming the hydrophobizing agent throughout the cementitious slurry.

Reference slurry samples were prepared by adding no hydrophobic agent (see sample 1 in Table 1) or by adding 0.1% to 0.2% by weight of a polydimethylsiloxane (C) (i.e. a commonly known hydrophobic agent, which is not a silicone resin; see samples 7 and 8 in Table 1).

The test and reference cementitious slurries were used in a Hatschek fiber cement product formation process to form fiber cement sheet samples. The fiber cement products were shaped to form samples of fiber cement sheets, and were then pressed and dried. Once dried, the fiber cement sheet samples underwent air-curing. For each type of sample, a coated version (i.e. FC sheet was provided with an UV-cured clear top coating layer) and an uncoated version was produced. For both coated and uncoated version, samples were prepared identically in three-fold and the results as described herein represent the average of these three identical samples.

**Table 1 - Overview of samples prepared in accordance with Example 1 (*silicone resin A is a DT resin containing at least one alkoxy-group)**

| **Sample number** | **Type of agent admixed with the fiber cementitious slurry** | **Concentration of agent present in the fiber cementitious slurry after admixing (% of active ingredient based on the mass of the solid materials)** |
|---|---|---|
| 1 | None | 0% |
| 2 | Silicone resin (A)* adsorbed to synthetic zeolite (B) | 0.04% |
| 3 | Silicone resin (A)* adsorbed to synthetic zeolite (B) | 0.09% |
| 4 | Silicone resin (A)* adsorbed to synthetic zeolite (B) | 0.18% |
| 5 | Silicone resin (A)* | 0.05% |
| 6 | Silicone resin (A)* | 0.15% |
| 7 | Polydimethylsiloxane (C) | 0.1% |
| 8 | Polydimethylsiloxane (C) | 0.2% |

### Example 2: Water-absorption tests for air-cured hydrophobized fiber cement samples prepared in accordance with Example 1

### a) Capillary water absorption test

The rate of absorption (sorptivity) of water by the fiber cement samples was determined by measuring the increase in the mass of a sample resulting from absorption of water as a function of time when only one surface of the specimen is exposed to water. Each sample was conditioned in an environment at a standard relative humidity to induce a consistent moisture condition in the capillary pore system. The exposed surface of the specimen is immersed in water and water ingress of unsaturated cement is dominated by capillary suction during initial contact with water.

The fiber cement samples 1 to 8, as produced in accordance with Example 1, were partially water immersed (in water bath) and the weights of the samples were measured after 1, 2, 4, 8, 24 and 48 hrs respectively. The capillary water absorption coefficient was determined at 24 hours for both coated and uncoated samples (see Table 2).

**Table 2 - Overview of water absorption coefficients of coated and uncoated samples 1 to 6 as prepared in accordance with Example 1**

| **Sample number** | **Water absorption coefficient of coated sample at 24 hrs [kg/(m².h^{0.5})]** | **Water absorption coefficient of uncoated sample at 24 hrs [kg/(m².h^{0.5})]** |
|---|---|---|
| 1 | 0.91 | 2.2 |
| 2 | 0.65 | 1.1 |
| 3 | 0.27 | 0.7 |
| 4 | 0.19 | 0.6 |
| 5 | 0.17 | 0.7 |
| 6 | 0.16 | 0.6 |

### b) Water absorption by Karsten

A Karsten test was performed on the uncoated fiber cement samples 1 to 8, as produced in accordance with Example 1. For each of the samples, the thickness of the sample was determined.

Subsequently, a Karsten tube was fixed on a central region of each sample using silicone. After 24 hours, the Karsten tube was filled with demineralized water and closed to prevent evaporation.

Water absorption (i.e. the volume of water absorped from the Karsten tube by the sample) was determined after 1, 2, 4, 6, 8, 24, 32 and 48 hours.

### Results

### Uncoated samples

Reduction of capillary water absorption (by partial water immersion) is observed for all samples 2 to 6. In particular, for samples containing about 0.05% of active hydrophobic agent (sample 2), water absorption was reduced by a factor 2, whereas for samples containing about 0.1% to 0.2% of active hydrophobic agent (samples 3 to 6), water absorption was reduced by a factor 3 to 4, compared to the references (sample 1).

Reduction of water absorption as measured by Karsten tests was observed for all samples 2 to 6.

In particular, the range of cumulative water absorption values after 48 hours for samples 2 to 6 was situated in the range between 0.3 ml and 2 ml (between 0.05% and 0.2% of active hydrophic silicone resin). On the other hand, for samples 7 and 8 (comprising 0.1% and 0.2%, respectively, of a polydimethylsiloxane i.e. a commonly known hydrophobic agent) between 10 ml and 30 ml cumulative water absorption was measured. Samples not containing a hydrophobic agent (sample 1) showed a cumulative water absorption in the range of 10.6 ml to 16.4 ml (see Figure 1).

For samples containing about 0.05% of active hydrophobic agent (sample 2), water absorption was reduced by a factor 5, whereas for samples containing about 0.1% to 0.2% of active hydrophobic agent (samples 3 to 6), water absorption was reduced by a factor 30 to 35, compared to the references (sample 1).

With regard to samples 7 and 8 (not containing a silicone resin nor a carrier but rather a commonly known hydrophobic polydimethylsiloxane), it was noted that these samples even showed an increased water absorption (opposite effect) when compared to reference sample 1.

### Coated samples

Reduction of capillary water absorption (by partial water immersion) was observed for all samples 2 to 6. In particular, irrespective of the dosage of the active hydrophobic agent, the water absorption was reduced by a factor of 3 to 6 for samples 2 to 6 when compared to the reference sample 1.

### Example 3: Production of air-cured hydrophobized fiber cement products according to the present invention (second series air-cured samples)

A fiber cement slurry was prepared, comprising polypropylene fibers, cellulose fibers, fly ash, calcium carbonate, and cement, at a consistency of 20 to 23 weight percent of solids in water and was mixed for approximately 15 minutes. The cement slurry was diluted with water to 7 weight percent of solids. To the diluted slurry an anionic polymer flocculation aid and defoamer was added to generate fiber cement solids.

Different test slurry samples were prepared by admixing either (i) about 0.05% to 0.2% by weight of a hydrophobizing agent, which comprises a silicone resin (A) adsorbed to a synthetically prepared zeolite carrier (B) (see samples 10 to 12 in Table 3), (ii) about 0.1% to 0.2% by weight of a hydrophobizing agent, which comprises a silicone resin (A) adsorbed to a colloid polymeric particle carrier (D) (see samples 13 to 15 in Table 3), or (iii) about 0.25% by weight of a silicone resin (A) (see sample 16 in Table 3). In the latter case, the cementitious particles in the fiber cement slurry function as a carrier for adsorbing the silicone resin and forming the hydrophobizing agent throughout the cementitious slurry.

Reference slurry samples were prepared by adding no hydrophobic agent (see sample 9 in Table 3).

The test and reference cementitious slurries were used in a Hatschek fiber cement product formation process to form fiber cement sheet samples. The fiber cement products were shaped to form samples of fiber cement sheets, and were then pressed and dried. Once dried, the fiber cement sheet samples underwent air-curing. For each type of sample, a coated version (i.e. FC sheet was provided with an UV-cured clear top coating layer) and an uncoated version was produced. For both coated and uncoated version, samples were prepared identically in three-fold and the results as described herein represent the average of these three identical samples.

**Table 3 - Overview of samples prepared in accordance with Example 3 (*silicone resin A is a DT resin containing at least one alkoxy-group)**

| **Sample number** | **Type of agent admixed with the fiber cementitious slurry** | **Concentration of agent present in the fiber cementitious slurry after admixing (% of active ingredient based on the mass of the solid materials)** |
|---|---|---|
| 9 | None | 0% |
| 10 | Silicone resin (A) adsorbed to synthetic zeolite (B) | 0.07% |
| 11 | Silicone resin (A) adsorbed to synthetic zeolite (B) | 0.1% |
| 12 | Silicone resin (A) adsorbed to synthetic zeolite (B) | 0.15% |
| 13 | Silicone resin (A) adsorbed to colloid polymeric particle bead (D) | 0.1% |
| 14 | Silicone resin (A) adsorbed to colloid polymeric particle bead (D) | 0.15% |
| 15 | Silicone resin (A) adsorbed to colloid polymeric particle bead (D) | 0.2 |
| 16 | Silicone resin (A) | 0.25% |

### Example 4: Water-absorption tests for air-cured hydrophobized fiber cement samples prepared in accordance with Example 3

### a) Capillary water absorption test

The rate of absorption (sorptivity) of water by the fiber cement samples was determined by measuring the increase in the mass of a sample resulting from absorption of water as a function of time when only one surface of the specimen is exposed to water. Each sample was conditioned in an environment at a standard relative humidity to induce a consistent moisture condition in the capillary pore system. The exposed surface of the specimen is immersed in water and water ingress of unsaturated cement is dominated by capillary suction during initial contact with water.

The fiber cement samples 9 to 16, as produced in accordance with Example 3, were partially water immersed (in water bath) and the weights of the samples were measured after 1, 2, 4, 8, 24 and 48 hours, respectively. The capillary water absorption coefficient was determined at 24 hours for both coated and uncoated samples (see Figures 2 and 3).

### b) Water absorption by Karsten

A Karsten test was performed on the uncoated fiber cement samples 9 to 16, as produced in accordance with Example 3. For each of the samples, the thickness of the sample was determined. Subsequently, a Karsten tube was fixed on a central region of each sample using silicone. After 24 hours, the Karsten tube was filled with demineralized water and closed to prevent evaporation. Water absorption (i.e. the volume of water absorped from the Karsten tube by the sample) was determined after 1, 2, 4, 6, 8, 24, 32 and 48 hours.

### Results

### Uncoated samples

Reduction of capillary water absorption (by partial water immersion) is observed for all samples 10 to 16 (see Figure 2). A reduction of cumulative water absorption of between 27% to 85% was observed compared to the reference sample 9.

Reduction of water absorption as measured by Karsten tests was observed for all samples 10 to 16.

In particular, the cumulative water absorption values after 48 hours for samples 10 to 12 were situated between 0.5 and 1.6 ml, for samples 13 to 15 between 0.3 and 0.5 ml and for sample 16 around 0.3 ml. The reference sample, on the other hand, showed a cumulative water absorption at 48 hours in the range of 4.1 to 4.9 ml (see Figure 4). Samples 10 to 16 absorb 3 to 15 times less water, compared to the reference (sample 9).

Thus, for samples containing about 0.07% of active hydrophobic agent (sample 10), water absorption was reduced by a factor 3, whereas for samples containing about 0.1% to 0.25% of active hydrophobic agent (samples 11 to 16), water absorption was reduced by a factor 12 to 15, compared to the references (sample 9).

### Coated samples

Reduction of capillary water absorption (by partial water immersion) was observed for all samples 10 to 16 (see Figure 3). In particular, irrespective of the dosage of the active hydrophobic agent, the water absorption was reduced by 50% to 85% for samples 10 to 16 when compared to the reference sample 9.

### Example 5: Production of air-cured hydrophobized fiber cement products according to the present invention (third series air-cured samples)

A fiber cement slurry was prepared, comprising polypropylene fibers, cellulose fibers, fly ash, calcium carbonate, and cement, at a consistency of 20 to 23 weight percent of solids in water and was mixed for approximately 15 minutes. The cement slurry was diluted with water to 7 weight percent of solids. To the diluted slurry an anionic polymer flocculation aid and defoamer was added to generate fiber cement solids.

Different test slurry samples were prepared by admixing either (i) about 0.25% by weight of a hydrophobizing agent, which comprises a silicone resin (E) (sample 18 in Table 4), (ii) about 0.15% to 0.25% by weight of a hydrophobizing agent, which comprises a silicone resin (E) adsorbed to a synthetically prepared clay carrier (F) (sample 19 in Table 4), (iii) about 0.25% of a hydrophobizing agent, which comprises a modified siloxane (G) adsorbed to a limestone carrier (H) (sample 20 in Table 4) or modified silane (I) adsorbed to a limestone carrier (H) (sample 21 in Table 4), or (iv) about 0.25% by weight of a silicone resin (A) (sample 22 in Table 4). Reference slurry samples were prepared by adding no hydrophobic agent (see sample 17 in Table 4).

The test and reference cementitious slurries were used in a Hatschek fiber cement product formation process to form fiber cement sheet samples. The fiber cement products were shaped to form samples of fiber cement sheets, and were then pressed and dried. Once dried, the fiber cement sheet samples underwent air-curing. For each type of sample, a coated version (i.e. FC sheet was provided with an UV-cured clear top coating layer) and an uncoated version was produced. For both coated and uncoated version, samples were prepared identically in three-fold and the results as described herein represent the average of these three identical samples.

**Table 4 - Overview of samples prepared in accordance with Example 5 (*silicone resin A and silicone resin E are both DT resins containing at least one alkoxy-group)**

| **Sample number** | **Type of agent admixed with the fiber cementitious slurry** | **Concentration of agent present in the fiber cementitious slurry after admixing (% of active ingredient based on the mass of the solid materials)** |
|---|---|---|
| 17 | None | 0% |
| 18 | Silicone resin (E) | 0.25% |
| 19 | Silicone resin (E) adsorbed to clay carrier (F) | 0.25% |
| 20 | Modified siloxane (G) adsorbed to limestone carrier (H) | 0.24% |
| 21 | Modified silane (I) adsorbed to limestone carrier (H) | 0.25% |
| 22 | Silicone resin (A) | 0.25% |

### Example 6: Water-absorption tests for air-cured hydrophobized fiber cement samples prepared in accordance with Example 5

### a) Capillary water absorption test

The rate of absorption (sorptivity) of water by the fiber cement samples was determined by measuring the increase in the mass of a sample resulting from absorption of water as a function of time when only one surface of the specimen is exposed to water. Each sample was conditioned in an environment at a standard relative humidity to induce a consistent moisture condition in the capillary pore system. The exposed surface of the specimen is immersed in water and water ingress of unsaturated cement is dominated by capillary suction during initial contact with water.

The fiber cement samples 17 to 22, as produced in accordance with Example 5, were partially water immersed (in water bath) and the weights of the samples were measured after 1, 2, 4, 8, 24 and 48 hours, respectively. The capillary water absorption coefficient was determined at 24 hours for both coated and uncoated samples (see Figures 5 and 7).

### b) Water absorption by Karsten

A Karsten test was performed on the uncoated fiber cement samples 17 to 22, as produced in accordance with Example 5. For each of the samples, the thickness of the sample was determined.

Subsequently, a Karsten tube was fixed on a central region of each sample using silicone. After 24 hours, the Karsten tube was filled with demineralized water and closed to prevent evaporation.

Water absorption (i.e. the volume of water absorped from the Karsten tube by the sample) was determined after 1, 2, 4, 6, 8, 24, 32 and 48 hours.

### Results

### Uncoated samples

Reduction of capillary water absorption (by partial water immersion) is observed for all samples 18 to 22 (see Figure 5). A reduction of cumulative water absorption of between 60% to 85% was observed compared to the reference sample 17. However, it is clear from Table 5 and Figure 5 that the hydrophobic agents comprising a modified siloxane adsorbed to a carrier or a modified silane adsorbed to a carrier (i.e. samples 20 and 21, respectively) perform less well (and thus absorb more water) than the hydrophobic agents comprising a silicone resin, either as such or adsorbed to a carrier (i.e. samples 18, 19 and 22).

Reduction of water absorption as measured by Karsten tests was observed for all samples 18 to 22.

In particular, the cumulative water absorption value after 48 hours for sample 19 was situated between 0.29 and 0.3 ml, for samples 18 and 22 between 0.66 and 0.71 ml, and for samples 20 and 21 between 0.7 and 0.76 ml. The reference sample, on the other hand, showed a cumulative water absorption at 48 hours of around 21 ml (see Figure 6). Samples 18 to 22 absorb 3.5 to 70 times less water, compared to the reference (sample 17). It can be observed from the graph of Figure 6 that the hydrophobic agents comprising a modified siloxane adsorbed to a carrier or a modified silane adsorbed to a carrier (i.e. samples 20 and 21, respectively) perform less well (and thus absorb more water) than the hydrophobic agents comprising a silicone resin, either as such or adsorbed to a carrier (i.e. samples 18, 19 and 22).

### Coated samples

Reduction of capillary water absorption (by partial water immersion) was observed for all samples 18 to 22. In particular, irrespective of the dosage of the active hydrophobic agent, the water absorption was reduced by 40% to 83% when compared to the reference sample 17. Nevertheless, it is clear from Table 5 and Figure 7 that the hydrophobic agents comprising a modified siloxane adsorbed to a carrier or a modified silane adsorbed to a carrier (i.e. samples 20 and 21, respectively) perform less well (and thus absorb more water) than the hydrophobic agents comprising a silicone resin, either as such or adsorbed to a carrier (i.e. samples 18, 19 and 22).

**Table 5 - Overview of water absorption coefficients of coated and uncoated samples 17 to 22 as prepared in accordance with Example 5**

| **Sample number** | **Water absorption coefficient of coated sample at 24 hrs [kg/(m².h^{0.5})]** | **Water absorption coefficient of uncoated sample at 24 hrs [kg/(m².h^{0.5})]** |
|---|---|---|
| 17 | 0.89 | 1.49 |
| 18 | - | 0.36 |
| 19 | 0.35 | 0.34 |
| 20 | 0.54 | 0.59 |
| 21 | 0.41 | 0.46 |
| 22 | 0.13 | 0.26 |

### Example 7: Production of air-cured hydrophobized fiber cement products according to the present invention (fourth series air-cured samples)

Different fiber cement test slurry samples were prepared by admixing polypropylene fibers, cellulose fibers, fly ash, calcium carbonate, and cement, at a consistency of 20 to 23 weight percent of solids in water and was mixed for approximately 15 minutes. The cement slurry was diluted with water to 7 weight percent of solids. To the diluted slurry an anionic polymer flocculation aid and defoamer was added to generate fiber cement solids.

In the fiber cement slurry preparation process, 0.15% of silicone resin (A) (weight % of silicone resin (A) on total weight of fiber cement slurry solids) was added, in different ways as follows:
(i) Admixing silicon resin (A) with cellulose pulp and then adding the mixture of silicone resin (A) and cellulose pulp to a mixture of the remaining ingredients of the fiber cement slurry (see sample 24 in Table 6);
(ii) Directly adding silicone resin (A) to a prepared ready-to-use fiber cement slurry (see sample 25 in Table 6);
(iii) Admixing silicon resin (A) with a slurry comprising kaolin and cellulose pulp and then adding the mixture of kaolin, cellulose fibers and silicone resin (A) to a mixture of the remaining ingredients of the fiber cement slurry (see sample 26 in Table 6);
(iv) Admixing silicon resin (A) with a slurry comprising limestone and cellulose pulp and then adding the mixture of limestone, cellulose fibers and silicone resin (A) to a mixture of the remaining ingredients of the fiber cement slurry (see sample 27 in Table 6); and
(v) Admixing silicon resin (A) with a slurry comprising cement and then adding the mixture of cement and silicone resin (A) to a mixture of the remaining ingredients of the fiber cement slurry (see sample 28 in Table 6).

In addition, samples were prepared by admixing 0.2% of silicone resin (A) adsorbed to a synthetic zeolite carrier (B).
In particular, 0.2% (weight % of silicone resin (A) on total weight of fiber cement slurry solids) of silicone resin (A) adsorbed to a synthetic zeolite carrier (B) was added, in different ways as follows:
(i) Admixing silicon resin (A) adsorbed to synthetic zeolite carrier (B) with cellulose pulp and then adding the mixture of cellulose pulp and silicone resin (A) adsorbed to zeolite (B) to a mixture of the remaining ingredients of the fiber cement slurry (see sample 29 in Table 6);
(ii) Directly adding silicone resin (A) adsorbed to zeolite (B) to a prepared ready-to-use fiber cement slurry (see sample 30 in Table 6);

Reference slurry samples were prepared by adding no hydrophobic agent (see sample 23 in Table 6). The test and reference cementitious slurries were used in a Hatschek fiber cement product formation process to form fiber cement sheet samples. The fiber cement products were shaped to form samples of fiber cement sheets, and were then pressed and dried. Once dried, the fiber cement sheet samples underwent air-curing. Samples were prepared identically in three-fold and the results as described herein represent the average of these three identical samples.

### Example 8: Water-absorption tests for air-cured hydrophobized fiber cement samples prepared in accordance with Example 7

### a) Capillary water absorption test

The rate of absorption (sorptivity) of water by the fiber cement samples was determined by measuring the increase in the mass of a sample resulting from absorption of water as a function of time when only one surface of the specimen is exposed to water. Each sample was conditioned in an environment at a standard relative humidity to induce a consistent moisture condition in the capillary pore system. The exposed surface of the specimen is immersed in water and water ingress of unsaturated cement is dominated by capillary suction during initial contact with water.

The fiber cement samples 23 to 30, as produced in accordance with Example 7, were partially water immersed (in water bath) and the weights of the samples were measured after 1, 2, 4, 8, 24 and 48 hours, respectively. The capillary water absorption coefficient was determined at 24 hours (see Figure 8).

**Table 6 - Overview of samples prepared in accordance with Example 7(*silicone resin A is a DT resin containing at least one alkoxy-group)**

| **Sample number** | **Type of agent admixed with the fiber cementitious slurry** | **Concentration of agent present in the fiber cementitious slurry after admixing (% of active ingredient based on the mass of the solid materials)** |
|---|---|---|
| 23 | None | 0% |
| 24 | Silicone resin (A) mixed with cellulose pulp | 0.15% |
| 25 | Silicone resin (A) | 0.15% |
| 26 | Silicone resin (A) mixed with slurry comprising kaolin and cellulose pulp | 0.15% |
| 27 | Silicone resin (A) mixed with slurry comprising limestone and cellulose pulp | 0.15% |
| 28 | Silicone resin (A) mixed with slurry comprising cement | 0.15% |
| 29 | Silicone resin (A) adsorbed to synthetic zeolite (B) mixed with cellulose pulp | 0.2% |
| 30 | Silicone resin (A) adsorbed to synthetic zeolite (B) | 0.2% |

### b) Water absorption by Karsten

A Karsten test was performed on the uncoated fiber cement samples 23 to 30, as produced in accordance with Example 7. For each of the samples, the thickness of the sample was determined.

Subsequently, a Karsten tube was fixed on a central region of each sample using silicone. After 24 hours, the Karsten tube was filled with demineralized water and closed to prevent evaporation.

Water absorption (i.e. the volume of water absorped from the Karsten tube by the sample) was determined after 1, 2, 4, 6, 8, 24, 32 and 48 hours.

In addition, for certain samples, different cross-sections of the same sample were subjected to a Karsten test to identify the uniformity of the degree of hydrophobicity (data not shown).

### Results

Reduction of capillary water absorption (by partial water immersion) is observed for all samples 24 to 30 (see Figure 8). A reduction of cumulative water absorption of between 68% to 82% was observed compared to the reference sample 23.

**Table 7 - Overview of water absorption coefficients of samples 23 to 30 as prepared in accordance with Example 7**

| **Sample number** | **Water absorption coefficient at 24 hrs [kg/(m².h^{0.5})]** |
|---|---|
| 23 | 2.16 |
| 24 | 0.41 |
| 25 | 0.65 |
| 26 | 0.34 |
| 27 | 0.69 |
| 28 | 0.64 |
| 29 | 0.68 |
| 30 | 0.69 |

Reduction of water absorption as measured by Karsten tests was observed for all samples 24 to 30.
In particular, the cumulative water absorption values measured after 48 hours were situated in the range between 0.18 ml and 0.30 ml for the test samples 24 to 30 whereas the corresponding reference values were situated around 3.9 ml. Thus, the test samples absorbed about 13 to 21 times less water than the reference, depending on the hydrophobic agent used (see Figure 9).
It was also shown that the degree of hydrophobicity is comparable over different cross-sections of the sheet, indicating that the hydrophobizing agent was well and uniformly dispersed over the entire internal structure of the fiber cement end product (data not shown).

### Example 9: Production of air-cured hydrophobized fiber cement products according to the present invention (fifth series air-cured samples)

Different fiber cement test slurry samples were prepared by admixing polypropylene fibers, cellulose fibers, fly ash, calcium carbonate, and cement, at a consistency of 20 to 23 weight percent of solids in water and was mixed for approximately 15 minutes. The cement slurry was diluted with water to 7 weight percent of solids. To the diluted slurry an anionic polymer flocculation aid and defoamer was added to generate fiber cement solids.

In the fiber cement slurry preparation process, 0.15% of a silicone resin (weight % of silicone resin on total weight of fiber cement slurry solids) was added in different ways as follows:
(i) Admixing 0.15% of silicon resin (A) with cellulose pulp and then adding the mixture of silicone resin (A) and cellulose pulp to a mixture of the remaining ingredients of the fiber cement slurry (see sample 32 in Table 8);
(ii) Admixing 0.15% of silicon resin (E) with cellulose pulp and then adding the mixture of silicone resin (A) and cellulose pulp to a mixture of the remaining ingredients of the fiber cement slurry (see sample 33 in Table 8);
(iii) Admixing 0.15% of silicon resin (A) with a slurry comprising 2% kaolin and cellulose pulp and then adding the mixture of kaolin, cellulose fibers and silicone resin (A) to a mixture of the remaining ingredients of the fiber cement slurry (see sample 34 in Table 8);
(iv) Admixing 0.15% of silicon resin (E) with a slurry comprising 2% kaolin and cellulose pulp and then adding the mixture of kaolin, cellulose fibers and silicone resin (A) to a mixture of the remaining ingredients of the fiber cement slurry (see sample 35 in Table 8);

In addition, samples were prepared by admixing 0.15% of silicone resin adsorbed to a carrier.
In particular, 0.15% (weight % of silicone resin on total weight of fiber cement slurry solids) of silicone resin adsorbed to a carrier was added in different ways as follows:
(i) Adding silicone resin (A) adsorbed to zeolite (B) to a prepared ready-to-use fiber cement slurry (see sample 36 in Table 8);
(ii) Adding silicone resin (E) adsorbed to clay carrier (F) to a prepared ready-to-use fiber cement slurry (see sample 37 in Table 8);
(iii) Adding silicone resin (E) adsorbed to clay carrier (J) to a prepared ready-to-use fiber cement slurry (see sample 38 in Table 8);

Reference slurry samples were prepared by adding no hydrophobic agent (see sample 31 in Table 8). The test and reference cementitious slurries were used in a Hatschek fiber cement product formation process to form fiber cement sheet samples. The fiber cement products were shaped to form samples of fiber cement sheets, and were then pressed and dried. Once dried, the fiber cement sheet samples underwent air-curing. Samples were prepared identically in three-fold and the results as described herein represent the average of these three identical samples.

**Table 8 - Overview of samples prepared in accordance with Example 9 (*silicone resin A and silicone resin E are both DT resins containing at least one alkoxy-group)**

| **Sample number** | **Type of agent admixed with the fiber cementitious slurry** | **Concentration of agent present in the fiber cementitious slurry after admixing (% of active ingredient based on the mass of the solid materials)** |
|---|---|---|
| 31 | None | 0% |
| 32 | Silicone resin (A) mixed with cellulose pulp | 0.15% |
| 33 | Silicone resin (E) mixed with cellulose pulp | 0.15% |
| 34 | Silicone resin (A) mixed with slurry comprising 2% kaolin and cellulose pulp | 0.15% |
| 35 | Silicone resin (E) mixed with slurry comprising 2% kaolin and cellulose pulp | 0.15% |
| 36 | Silicone resin (A) adsorbed to synthetic zeolite (B) | 0.15% |
| 37 | Silicone resin (E) adsorbed to clay carrier (F) | 0.15% |
| 38 | Silicone resin (E) adsorbed to clay carrier (J) | 0.15% |

### Example 10: Water-absorption tests for air-cured hydrophobized fiber cement samples prepared in accordance with Example 9

### a) Capillary water absorption test

The rate of absorption (sorptivity) of water by the fiber cement samples was determined by measuring the increase in the mass of a sample resulting from absorption of water as a function of time when only one surface of the specimen is exposed to water. Each sample was conditioned in an environment at a standard relative humidity to induce a consistent moisture condition in the capillary pore system. The exposed surface of the specimen is immersed in water and water ingress of unsaturated cement is dominated by capillary suction during initial contact with water.

The fiber cement samples 31 to 38, as produced in accordance with Example 9, were partially water immersed (in water bath) and the weights of the samples were measured after 1, 2, 4, 8, 24 and 48 hours, respectively. The capillary water absorption coefficient was determined at 24 hours (see Figure 10).

### b) Water absorption by Karsten

A Karsten test was performed on the uncoated fiber cement samples 31 to 38, as produced in accordance with Example 9. For each of the samples, the thickness of the sample was determined.

Subsequently, a Karsten tube was fixed on a central region of each sample using silicone. After 24 hours, the Karsten tube was filled with demineralized water and closed to prevent evaporation.

Water absorption (i.e. the volume of water absorped from the Karsten tube by the sample) was determined after 1, 2, 4, 6, 8, 24, 32 and 48 hours.

In addition, for certain samples, different cross-sections of the same sample were subjected to a Karsten test to identify the uniformity of the degree of hydrophobicity (data not shown).

### Results

Reduction of capillary water absorption (by partial water immersion) is observed for all samples 32 to 38 (see Figure 10). A reduction of cumulative water absorption of between 42% to 85% was observed compared to the reference sample 31.

**Table 9 - Overview of water absorption coefficients of samples 31 to 38 as prepared in accordance with Example 9**

| **Sample number** | **Water absorption coefficient at 24 hrs [kg/(m².h^{0.5})]** |
|---|---|
| 31 | 1.70 |
| 32 | 0.37 |
| 33 | 0.99 |
| 34 | 0.25 |
| 35 | 0.61 |
| 36 | 0.46 |
| 37 | 0.48 |
| 38 | 0.50 |

Reduction of water absorption as measured by Karsten tests was observed for all samples 32 to 38.

In particular, the cumulative water absorption values measured after 48 hours were situated in the range between 0.2 ml and 0.6 ml for the test samples 32 to 38 whereas the corresponding reference values were situated around 1.7 ml. Thus, the test samples absorbed about 3 to 9 times less water than the reference, depending on the hydrophobic agent used (see Figure 11).

It was also shown that the degree of hydrophobicity is comparable over different cross-sections of the sheet, indicating that the hydrophobizing agent was well and uniformly dispersed over the entire internal structure of the fiber cement end product (data not shown).

### Example 11: Production of autoclave-cured hydrophobized fiber cement products according to the present invention (first series autoclave-cured samples)

A fiber cement slurry was prepared, comprising cellulose fibers, fly ash, calcium carbonate, and cement, at a consistency of 20 to 23 weight percent of solids in water and was mixed for approximately 15 minutes. The cement slurry was diluted with water to 7 weight percent of solids.

To the diluted slurry an anionic polymer flocculation aid and defoamer was added to generate fiber cement solids. Different test slurry samples were prepared by admixing to the fiber cement slurries different dosages of silicone resins in different forms as presented in Table 10. The test and reference cementitious slurries were used in a Hatschek fiber cement product formation process to form fiber cement sheet samples. The fiber cement products were shaped to form samples of fiber cement sheets, and were then pressed and dried. Once dried, the fiber cement sheet samples underwent autoclave-curing for a total of 9 hours, at a pressure between 100 to 150 psi and at a temperature of 148 to 177 degrees Celsius. Samples were prepared identically in three-fold and the results as described herein represent the average of these three identical samples.

**Table 10 - Overview of samples prepared in accordance with Example 11(*silicone resin A is a DT resin containing at least one alkoxy-group)**

| **Sample number** | **Type of agent admixed with the fiber cementitious slurry** | **Concentration of agent present in the fiber cementitious slurry after admixing (% of active ingredient based on the mass of the solid materials)** |
|---|---|---|
| 39 | None | 0% |
| 40 | Silicone resin (A) | 0.15% |
| 41 | Silicone resin (A) | 0.25% |
| 42 | Silicone resin (A) adsorbed to polymeric colloid particle bead (D) | 0.15% |
| 43 | Silicone resin (A) adsorbed to polymeric colloid particle bead (D) | 0.25% |
| 44 | Silicone resin (A) adsorbed to synthetic zeolite carrier (B) | 0.15% |
| 45 | Silicone resin (A) adsorbed to synthetic zeolite carrier (B) | 0.25% |

### Example 12: Water-absorption tests for autoclave-cured hydrophobized fiber cement samples prepared in accordance with Example 11

### Water absorption by Karsten

A Karsten test was performed on the uncoated fiber cement samples 39 to 45, as produced in accordance with Example 11. For each of the samples, the thickness of the sample was determined.

Subsequently, a Karsten tube was fixed on a central region of each sample using silicone. After 24 hours, the Karsten tube was filled with demineralized water and closed to prevent evaporation.

Water absorption (i.e. the volume of water absorped from the Karsten tube by the sample) was determined after 1, 2, 4, 6, 8, 24, 32 and 48 hours.

In addition, for certain samples, different cross-sections of the same sample were subjected to a Karsten test to identify the uniformity of the degree of hydrophobicity (data not shown).

### Results

Reduction of water absorption as measured by Karsten tests was observed for all samples 40 to 45.

In particular, the cumulative water absorption values after 48 hours for samples 42 and 43 were situated between 0.8 and 0.9 ml, for samples 40 and 41 between 0.8 and 1.0 ml, and for samples 44 and 45 between 0.9 and 1.1 ml. The reference sample, on the other hand, showed a cumulative water absorption at 48 hours of between 1.7 and 2.2 ml (see Figure 12). Samples 40 to 45 thus absorb 2 times less water, compared to the reference (sample 39).

It was also shown that the degree of hydrophobicity is comparable over different cross-sections of the sheet, indicating that the hydrophobizing agent was well and uniformly dispersed over the entire internal structure of the fiber cement end product (data not shown).

### Example 13: Production of autoclave-cured hydrophobized fiber cement products according to the present invention (second series autoclave-cured samples)

A fiber cement slurry was prepared, comprising cellulose fibers, fly ash, calcium carbonate, and cement, at a consistency of 20 to 23 weight percent of solids in water and was mixed for approximately 15 minutes. The cement slurry was diluted with water to 7 weight percent of solids.

To the diluted slurry an anionic polymer flocculation aid and defoamer was added to generate fiber cement solids.

Different test slurry samples were prepared by admixing to the fiber cement slurries 0.25% of a silicone resin (weight % of silicone resin on total weight of solids in final fiber cement slurry) as presented in Table 11.

The test and reference cementitious slurries were used in a Hatschek fiber cement product formation process to form fiber cement sheet samples. The fiber cement products were shaped to form samples of fiber cement sheets, and were then pressed and dried. Once dried, the fiber cement sheet samples underwent autoclave-curing for a total of 9 hours, at a pressure between 100 to 150 psi and at a temperature of 148 to 177 degrees Celsius. Samples were prepared identically in three-fold and the results as described herein represent the average of these three identical samples.

**Table 11- Overview of samples prepared in accordance with Example 13 (*silicone resin A, silicone resin E and silicone resin K are all DT resins containing at least one alkoxy-group)**

| **Sample number** | **Type of agent admixed with the fiber cementitious slurry** | **Concentration of agent present in the fiber cementitious slurry after admixing (% of active ingredient based on the mass of the solid materials)** |
|---|---|---|
| 46 | None | 0% |
| 47 | Silicone resin (K) | 0.25% |
| 48 | Silicone resin (A) | 0.25% |
| 49 | Silicone resin (E) | 0.25% |

### Example 14: Water-absorption tests for autoclave-cured hydrophobized fiber cement samples prepared in accordance with Example 13

### Water absorption by Karsten

A Karsten test was performed on the uncoated fiber cement samples 46 to 49, as produced in accordance with Example 13. For each of the samples, the thickness of the sample was determined.

Subsequently, a Karsten tube was fixed on a central region of each sample using silicone. After 24 hours, the Karsten tube was filled with demineralized water and closed to prevent evaporation.

Water absorption (i.e. the volume of water absorped from the Karsten tube by the sample) was determined after 1, 2, 4, 6, 8, 24, 32 and 48 hours.

### Results

Reduction of water absorption as measured by Karsten tests was observed for all samples 47 to 49.

In particular, the cumulative water absorption values after 48 hours for samples 47, 48 and 49 were situated between 0.9 and 1.9 ml. The reference sample, on the other hand, showed a cumulative water absorption at 48 hours of between 1.6 and 2.5 ml (see Figure 13). Samples 47 to 49 thus absorb 1.3 to 2.7 times less water, compared to the reference (sample 46).

### Example 15: Production of autoclave-cured hydrophobized fiber cement products according to the present invention (third series autoclave-cured samples)

A fiber cement slurry was prepared, comprising cellulose fibers, fly ash, calcium carbonate, and cement, at a consistency of 20 to 23 weight percent of solids in water and was mixed for approximately 15 minutes. The cement slurry was diluted with water to 7 weight percent of solids.

To the diluted slurry an anionic polymer flocculation aid and defoamer was added to generate fiber cement solids.

Different test slurry samples were prepared by admixing to the fiber cement slurries 0.25% of a silicone resin (weight % of silicone resin on total weight of solids in final fiber cement slurry) as presented in Table 12.

The test and reference cementitious slurries were used in a Hatschek fiber cement product formation process to form fiber cement sheet samples. The fiber cement products were shaped to form samples of fiber cement sheets, and were then pressed and dried. Once dried, the fiber cement sheet samples underwent autoclave-curing for a total of 9 hours, at a pressure between 100 to 150 psi and at a temperature of 148 to 177 degrees Celsius. Samples were prepared identically in three-fold and the results as described herein represent the average of these three identical samples.

**Table 12 - Overview of samples prepared in accordance with Example 15(*silicone resin A and silicone resin L are both DT resins containing at least one alkoxy-group)**

| **Sample number** | **Type of agent admixed with the fiber cementitious slurry** | **Concentration of agent present in the fiber cementitious slurry after admixing (% of active ingredient based on the mass of the solid materials)** |
|---|---|---|
| 50 | None | 0% |
| 51 | Silicone resin (A) | 0.25% |
| 52 | Silicone resin (L) | 0.25% |

### Example 16: Water-absorption tests for autoclave-cured hydrophobized fiber cement samples prepared in accordance with Example 15

### Water absorption by Karsten

A Karsten test was performed on the uncoated fiber cement samples 50 to 52, as produced in accordance with Example 15. For each of the samples, the thickness of the sample was determined. Subsequently, a Karsten tube was fixed on a central region of each sample using silicone. After 24 hours, the Karsten tube was filled with demineralized water and closed to prevent evaporation.

Water absorption (i.e. the volume of water absorped from the Karsten tube by the sample) was determined after 1, 2, 4, 6, 8, 24, 32 and 48 hours.

### Results

Reduction of water absorption as measured by Karsten tests was observed for samples 51 and 52.

In particular, the cumulative water absorption values after 48 hours for samples 51 and 52 situated between 0.6 and 0.8 ml. The reference sample, on the other hand, showed a cumulative water absorption at 48 hours of between 2.3 ml (see Figure 14). Samples 51 and 52 thus absorb 3 to 4 times less water, compared to the reference (sample 50).

### Example 17: Mechanical properties of air-cured hydrophobized fiber cement products according to the present invention

A fiber cement slurry was prepared, comprising polypropylene fibers, cellulose fibers, fly ash, calcium carbonate, and cement, at a consistency of 20 to 23 weight percent of solids in water and was mixed for approximately 15 minutes. The cement slurry was diluted with water to 7 weight percent of solids. To the diluted slurry an anionic polymer flocculation aid and defoamer was added to generate fiber cement solids.

A test slurry sample was prepared by admixing 0.3% by weight of a hydrophobizing agent, which comprises a silicone resin (A) (see sample 54 in Table 13).

A reference slurry sample was prepared by adding no hydrophobic agent (see sample 53 in Table 13).

The test and reference cementitious slurries were used in a Hatschek fiber cement product formation process to form fiber cement sheet samples. The fiber cement products were shaped to form samples of fiber cement sheets, and were then pressed and dried. Once dried, the fiber cement sheet samples underwent air-curing. Samples were prepared identically in three-fold and the results as described herein represent the average of these three identical samples.

**Table 13 - Overview of samples prepared in accordance with Example 17(*silicone resin A is a DT resin containing at least one alkoxy-group)**

| **Sample number** | **Type of agent admixed with the fiber cementitious slurry** | **Concentration of agent present in the fiber cementitious slurry after admixing (% of active ingredient based on the mass of the solid materials)** |
|---|---|---|
| 53 | None | 0% |
| 54 | Silicone resin (A) | 0.3% |

The formed air-cured sheets were analyzed for their physico-mechanical characteristics, i.e. modulus of rupture (MOR; expressed in Pa= kg/m.s²) after 4 months, after 12 months, after 18 months and after 24 months. The modulus of rupture (MOR; expressed in Pa= kg/m.s²) was measured by making use of a UTS/INSTRON apparatus (type 3345; cel=5000N). These mechanical tests were performed both under air-dry and water-saturated conditions (air-dry condition is obtained by conditioning the samples in a ventilated oven at 40°C during 3 days; water-saturated condition is obtained by immersion of the samples in tap water at room temperature and atmospheric pressure during 3 days).

The results are presented in Figures 15 to 18.

As can be derived from Table 14 and the graphs in Figures 15 to 18, representing the flexural strength (modulus of rupture; MOR) of reference sample 53 and test sample 54, it can be concluded that the flexural strength or modulus of rupture (sMOR) is significantly higher in the test sample as compared to the reference sample. Thus, it was surprisingly observed that the hydrophobized fiber cement products as produced according to the methods of the present invention as described herein, have a significantly higher strength than a reference sample not containing any hydrophobizing agent comprising a silicone resin.

The inventors up to now were not able to identify the exact reason why in-mass hydrophobation with a silicone resin as performed by the methods of the invention could contribute to the mechanical strength of the fiber cement end products.

However, but without being bound to a specific hypothesis or theory, it may be that that the silicone resin acts as a film around the reinforcing (PP and cellulose) fibers, which are present in the cementitious matrix, and as such protects these fibers from alkaline attack.

In addition and/or alternatively, without being bound to a specific theory, the improved reinforcement characteristics exhibited by the fiber cement products may be due to the fact that the presence of a silicone resin network improves entanglement between the fibers and thereby results in an improved strength and impact resistance of the fiber cement material in which these fibers are incorporated.

**Table 14 - Overview of mechanical properties (sMOR) of samples 53 and 54 as prepared in accordance with Example 17**

| **sMOR** | **sMOR 4 m. (MPa)** | | **sMOR 12 m. (MPa)** | | **sMOR 18 m. (MPa)** | | **sMOR 24 m. (MPa)** | |
|---|---|---|---|---|---|---|---|---|
| **Conditions** | **Water-saturated** | **Air-dried** | **Water-saturated** | **Air-dried** | **Water-saturated** | **Air-dried** | **Water-saturated** | **Air-dried** |
| **Sample 53** | 18.9 | 29.3 | 18.1 | 27.5 | 20.6 | 29.75 | 19.7 | 18.6 |
| **Sample 54** | 22 | 30.8 | 24.5 | 33.6 | 25.8 | 36 | 25.5 | 32.2 |

### Conclusion

From the results presented herein, it could be concluded that the water pick up by the fiber cement sheets containing the hydrophobizing agent comprising a silicone resin in accordance with the present invention, was significantly decreased as compared to fiber cement products not containing the hydrophobizing agent comprising a silicone resin in accordance with the present invention.

It was also shown that the degree of hydrophobicity in the hydrophobized fiber cement products of the present invention is comparable over different cross-sections of the products, indicating that the hydrophobizing agent is well and uniformly dispersed over the entire internal structure of the fiber cement end products.

Finally, it was shown that the mechanical strength of the hydrophobized fiber cement products of the present invention (comprising a silicone resin hydrophobizing agent uniformly dispersed in the fiber cement mass) is significantly increased as compared to fiber cement products not containing the hydrophobizing agent comprising a silicone resin in accordance with the present invention.

From the above, it is clear that the inventors have succeeded in finding novel and improved hydrophobized fiber cement products and methods for the production thereof as well as uses thereof in the building industry.

## Claims

1. A hydrophobized fiber cement product, comprising a fiber cementitious matrix and a hydrophobizing agent uniformly dispersed therein, wherein said hydrophobizing agent comprises at least one hydrophobic silicone resin.

2. The hydrophobized fiber cement product according to claim 1, wherein said hydrophobic silicone resin is a DT resin, an MQ resin, an MT resin, an MQT resin, or any combination thereof.

3. The hydrophobized fiber cement product according to claims 1 or 2, wherein said at least one hydrophobic silicone resin is a DT resin.

4. The hydrophobized fiber cement product according to claims 1 to 3, wherein said at least one hydrophobic silicone resin contains at least one alkoxy group.

5. The hydrophobized fiber cement product according to claims 1 to 4, wherein said at least one hydrophobic silicone resin is present in an amount of between 0.01 to 2 percent by weight of the total weight of said hydrophobized fiber cement product.

6. The hydrophobized fiber cement product according to claims 1 to 5, wherein said hydrophobizing agent comprises at least one carrier onto which said hydrophobic silicone resin is adsorbed.

7. The hydrophobized fiber cement product according to any of claims 1 to 7, wherein said at least one carrier has a specific surface about 1 to about 800 m²/g.

8. The hydrophobized fiber cement product according to any of claims 1 to 8, wherein said at least one carrier is selected from a zeolite(s), starch, native starch, methyl cellulose, carboxy methyl cellulose, cement, sand, silica, fly ash, alumino silicates, clay materials, lime, limestone, calcium carbonates, polystyrene beads and polyacrylate beads.

9. The hydrophobized fiber cement product according to any of claims 1 to 9, wherein the concentration of said at least one silicon resin in said fiber cementitious matrix varies by no more than about 20 percent between any two equivalent regions throughout a cross-section of said hydrophobized fiber cementitious material.

10. A process for producing a hydrophobized fiber cement product with enhanced water impermeability, wherein said process comprises at least the steps of:
a) admixing an inorganic curable cementitious matrix with a hydrophobizing agent to form a curable mixture, wherein said hydrophobizing agent comprises at least one hydrophobic silicone resin,
b) transforming the curable mixture into a shaped body; and
c) curing the curable mixture to form a uniformly hydrophobized fiber cement product.

11. The process according to claim 10, wherein said at least one hydrophobic silicone resin is a DT resin.

12. The process according to claims 10 or 11, wherein said at least one hydrophobic silicone resin contains at least one alkoxy group.

13. The process according to any of claims 10 to 12, wherein said at least one hydrophobic silicone resin is present in an amount of between 0.01 to 2 percent by weight of the total weight of said hydrophobized fiber cement product.

14. The process according to any of claims 10 to 13, wherein said hydrophobizing agent comprises at least one carrier onto which said hydrophobic silicone resin is adsorbed.

15. Use of a hydrophobized fiber cement product according to any of claims 1 to 9 as a building material.
